# EUROPEAN PATENT SPECIFICATION

(11) **EP 4 014 753 B1**
(45) Date of publication and mention of the grant of the patent: **24.01.2024**
(21) Application number: 20215919.0
(22) Date of filing: 21.12.2020
(51) Int. Cl.: A23L 3/00, A23L 3/04, B65B 55/14, F28C 3/00, F28F 27/00

(54) **CONTROL METHOD AND SYSTEM FOR CONTROLLING A MACHINE FOR THE TEMPERATURE PROCESSING OF CONTAINERS OF FOOD PRODUCTS**
VERFAHREN UND SYSTEM ZUR STEUERUNG EINER MASCHINE ZUR TEMPERATURVERARBEITUNG VON LEBENSMITTELBEHÄLTERN
PROCÉDÉ ET SYSTÈME DE COMMANDE D'UNE MACHINE POUR LE TRAITEMENT THERMIQUE DE RÉCIPIENTS DE PRODUITS ALIMENTAIRES

(43) Date of publication of application: 22.06.2022
(73) Proprietor: Sidel Participations, 76930 Octeville-sur-Mer (FR)
(72) Inventor: SOLFA, Andrea, 37139 Verona (IT)
(74) Representative: Sidel Group

(56) References cited:
- EP-A2- 2 959 782
- DE-A1- 3 029 113
- US-A- 4 441 406
- US-A- 4 849 235
- US-A1- 2002 073 652
- US-A1- 2009 280 222

## Description

The present invention relates to a control method for controlling a machine, generally intended for temperature processing of containers designed to contain food products; in particular, the following discussion will make explicit reference, without this implying any loss of generality, to the control method of a tunnel pasteurising machine (or pasteuriser) for pasteurising packaged food products.

The present invention also relates to a control system for controlling a machine for the temperature processing of containers of food products.

As is known, in a tunnel pasteuriser, food products to be pasteurised, packaged in bottles, cans or other containers, are fed by a conveyor along a forward movement path, which is usually divided into three main processing zones: a heating zone in which the product temperature is gradually raised; a heat-treatment zone in which the product temperature is brought to, and kept at, a pasteurising temperature for a desired time interval; and a cooling zone in which the product temperature is gradually lowered to a desired output temperature.

At the end of the temperature processing (i.e. at the output of the pasteuriser), it is required for the food products to have been kept above a predetermined temperature for at least a predetermined time, so as to accumulate at least a predetermined quantity of pasteurisation units (PUs) . In this way, effective pasteurisation of the processed products may be assured.

Each processing zone is, in turn, divided into a plurality of sub-zones, each one of which is operable and controllable independently of the others. The products, in each sub-zone, are processed by injecting thereon a flow of a fluid at a desired predetermined temperature. Usually, the fluid is a liquid, such as water, which is injected, sprayed, or applied in any equivalent manner on the products, although other fluids may as well be used, like a gas, such as air.

In particular, each sub-zone comprises a spraying unit positioned above the forward movement path of the products, and, in a possible solution, at least one collection tank positioned below the same forward movement path to collect the liquid, sprayed by the spraying unit, after it has wet the products.

According to a known solution, the processing liquid fed to the spraying units of the various sub-zones is taken, at least in part, from the collection tanks.

In particular, a process of recirculation is implemented, according to which the liquid fed to the spraying units of the heating sub-zones is taken from the tanks of the cooling sub-zones, whilst the liquid fed to the spraying means of the cooling sub-zones is taken from the tanks of the heating sub-zones. In this way, it is possible to achieve an effective energy saving, thanks to the fact that the heat transferred to the processing liquid by the products in the cooling zones may be used to heat the products in the heating zones, while the cooled down processing liquid collected in the heating zones may be used to cool down the products in the cooling zones. Moreover, in the heat treatment zone, the liquid fed to the spraying means of each sub-zone is usually taken directly from the collection tank of that sub-zone.

An example of tunnel pasteuriser is known from EP2702879.

Know from US2009/280222 is a tunnel pasteurizer as defined in the preamble of claim 1.

In detail, in many applications, in order to guarantee the final quality of the processed products, it is required that the output temperature of the products at the end of the temperature processing is maintained in a desired range, and a control action is required so that the output temperature is not higher than an upper output temperature threshold. The output temperature may further be controlled to be higher than a lower output temperature threshold of the desired range, so as to avoid condensation on the containers of the processed products.

In known machines, fresh fluid is injected in one of the tanks of the heating sub-zones, in order to maintain the output temperature of the products at the end of the temperature processing below the upper output temperature threshold. As a consequence, the temperature of the fluid inside the tanks of the heating sub-zones is lowered as well as the spraying temperature of the liquid exiting the spraying means of the cooling sub-zones, which is taken from such tanks.

However, in order to substantially vary the temperature of the fluid inside the tanks, it is necessary to inject large volumes of fresh fluid in the tanks of the heating sub-zones. This is due to the fact that the amount of fresh fluid to be injected depends on the temperature and mass of the fluid inside the tanks before fresh fluid injection.

This solution leaves room for improvement, because it causes fluid waste.

In view of this, a need is felt within the sector for a control method allowing to control the output temperature of the products at the end of the temperature processing in an efficient manner, while minimizing the fluid waste.

It is important to point out, at the same time, that the biochemical quality of the fluid is of the outmost importance for a pasteurising machine pasteurising packaged food products.

In this respect, it is necessary to consider that over time the fluid processed in the machine tends to become turbid and its corrosive power increases. In addition, biofilm progressively forms and bacteria like Legionella could proliferate.

In known machines, the fluid is periodically completely replaced by fresh fluid, in order to restore the desired biochemical quality. However, this solution is clearly suboptimal, because it causes a large amount of fluid to be wasted and requires the machine to be stopped.

As a consequence, a need is also felt for a control method allowing to control the biochemical quality of the fluid, while minimizing the fluid waste.

It is an object of the present invention to provide a control method, which allows to meet at least one of the abovementioned needs in a simple and economic manner.

This object is achieved by the present invention, as it relates to a control method for controlling a machine for the temperature processing of containers of food products, as claimed in claim 1 and in claim 8.

The invention also relates to a control system for a machine for the temperature processing of containers for food products, as claimed in claim 9.

One preferred embodiment is hereinafter disclosed for a better understanding of the present invention, by way of a non-limitative example and with reference to the accompanying drawings, in which:
- Figure 1 is a functional scheme of a machine according to the present invention, with parts removed for clarity;
- Figure 2 is a block diagram of a portion of the machine of Figure 1, with parts removed for clarity;
- Figures 3 to 5 are respective flow charts relating to operations performed by the control method and system according to the present invention; and
- Figures 6 to 8 are flow charts relating to the operations illustrated in Figures 3 to 5, respectively, comprising further details on these operations.

In the following of the present description and in the claims the expression "in use" means "during operation".

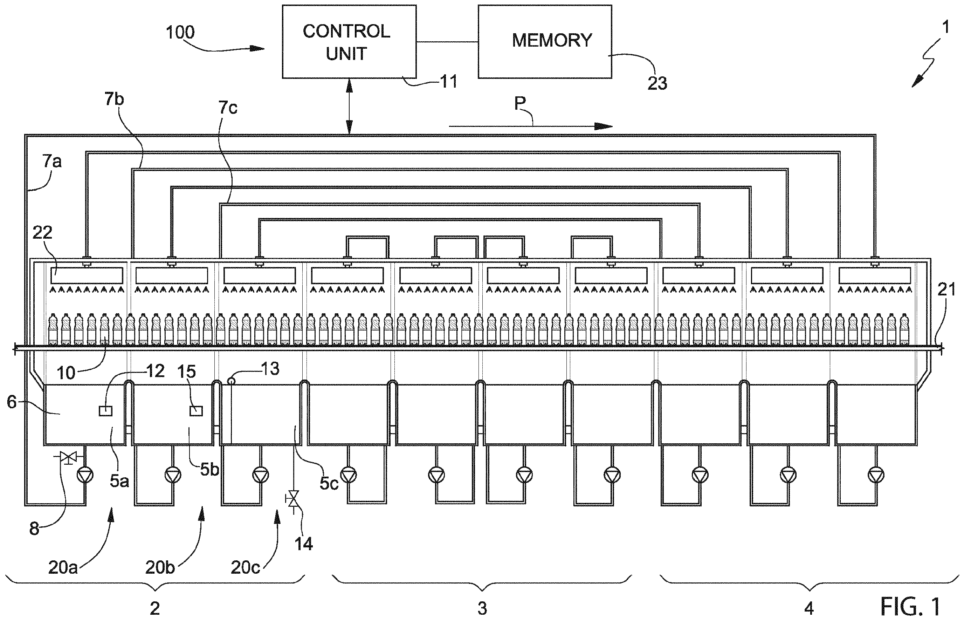

Figure 1 schematically shows a tunnel pasteurising machine, denoted as a whole with 1, comprising a control system 100 and a forward movement element 21, which may consist, for example, of one or more conveyor belts or any other type of conveyor, for moving food products packaged in containers 10 along a movement path P.

Machine 1 comprises a heating zone 2, a heat treatment zone 3 and a cooling zone 4 positioned one after another along movement path P, in order to carry out pasteurisation of the products in containers 10.

In detail, in heating zone 2 the temperature of containers 10 is gradually raised; in heat-treatment zone 3 the temperature of containers 10 is brought to, and kept at, a pasteurising temperature for a desired time interval; and in cooling zone 4 the temperature of containers 10 is gradually lowered to a desired output temperature.

Each one of the heating, heat treatment and cooling zones 2, 3, 4 is further divided into a number of sub-zones 20a, 20b, 20c positioned one after another along movement path P; in the exemplary embodiment shown in Figure 1, heating zone 2 is divided into three respective sub-zones.

Each one of the sub-zones 20a, 20b, 20c is provided with a respective collection tank 5a, 5b, 5c for storing a processing fluid 6 (for example water) and a respective injection assembly 7a, 7b, 7c for injecting processing fluid 6 from the respective collection tank 5a, 5b, 5c onto containers 10 that are carried by movement element 21.

In detail, each tank 5a, 5b, 5c is in fluidic communication with the other tanks 5a, 5b, 5c of the same zone 2, 3 or 4.

Each injection assembly 7a, 7b, 7c comprises, in turn, a plurality of spraying nozzles 22 for spraying processing fluid 6 onto containers 10.

In detail, collection tanks 5a, 5b, 5c are also adapted to collect processing fluid 6 after it has been sprayed on containers 10 (i.e. after it has exchanged heat with containers 10). In the shown embodiment, nozzles 22 and collection tanks 5a, 5b, 5c are positioned above and, respectively, below the forward movement element 21, so as to exploit the gravity effect for the movement of processing fluid 6.

In the following of the present description, reference will be made to heating zone 2 only.

In particular, collection tanks 5a, 5b, 5c of heating zone 2 are arranged in succession in such a manner that tank 5a is the upstream-most tank of heating zone 2 and tank 5c is the downstream-most tank of heating zone 2 according to movement path P.

In addition, the temperature of processing fluid 6 inside tank 5b is higher than the temperature of processing fluid 6 inside tank 5a; the temperature of processing fluid 6 inside tank 5c is higher than the temperature of processing fluid 6 inside tank 5b.

Machine 1 further comprises an inlet valve 8 for the inlet of a fresh processing fluid 9 from outside machine 1.

In detail, fresh processing fluid 9 is a processing fluid that has not yet been inlet and processed in machine 1.

Preferably, processing fluid 6 and fresh processing fluid 9 differ only in terms of physical-biochemical properties, such as temperature and/or pH.

Furthermore, the physical-biochemical properties of fresh processing fluid 9 approximate those of processing fluid 6 after a given number of operating hours of machine 1.

In the embodiment shown, fresh processing fluid 9 has a lower temperature than processing fluid 6.

In detail, inlet valve 8 is controllable in an open configuration, in which it allows the inlet of fresh processing fluid 9, or in a closed configuration, in which it prevents fresh processing fluid 9 from being inlet inside machine 1.

In detail, inlet valve 8 is adapted to allow the injection of fresh processing fluid 9 directly in the upstream-most collection tank 5a according to movement path P (Figure 1).

Heating zone 2 further comprises:
- a temperature sensor 12, which is adapted to detect a temperature t of processing fluid 6; and
- a level sensor 13, which is adapted to detect a level 1 of processing fluid 6 inside one of collection tanks 5a, 5b, 5c.

In the embodiment shown, level sensor 13 is a level probe.

Preferably, temperature t is the temperature of processing fluid 6 inside one of collection tanks 5a, 5b, 5c.

In the embodiment shown, temperature sensor 12 is arranged at upstream-most tank 5a and, therefore, temperature t is the temperature of processing fluid 6 inside upstream-most tank 5a.

Heating zone 2 further comprises a drainage valve 14, which is controllable in an open configuration, in which it allows the drainage of at least part of processing fluid 6 from one collection tank 5a, 5b, 5c, or in a closed configuration, in which it prevents the drainage of processing fluid 6 from said one collection tank 5a, 5b, 5c.

Preferably, level sensor 13 is arranged in the same collection tank 5a, 5b, 5c from which drainage valve 14 allows or prevents the drainage of processing fluid 6.

In the embodiment shown, drainage valve 14 is adapted to allow or prevent the drainage of processing fluid 6 from the downstream-most tank 5c according to movement path P (figure 1).

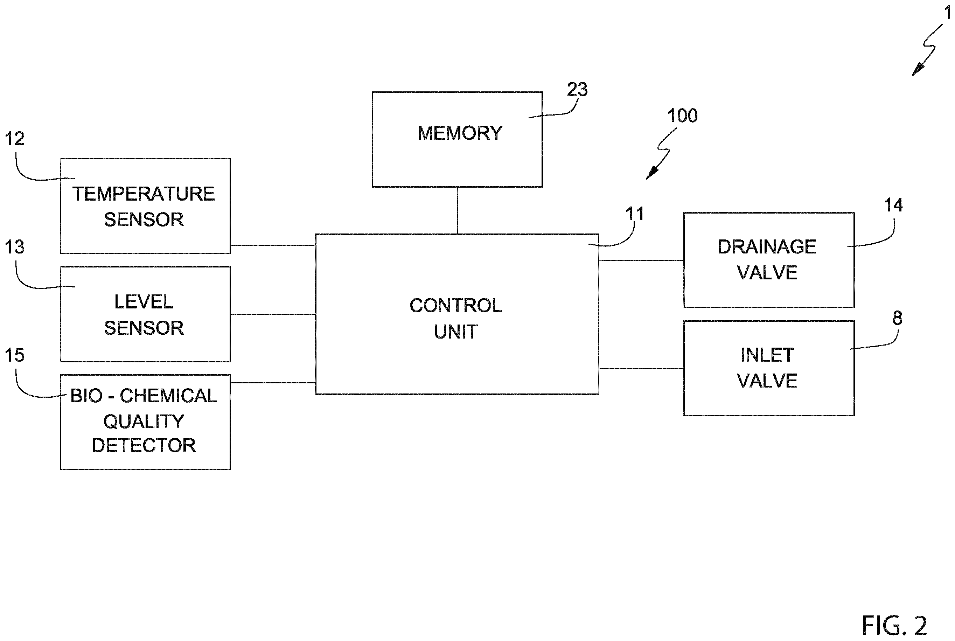

Furthermore, control system 100 of machine 1 comprises a control unit 11, which is operatively connected to temperature sensor 12 and level sensor 13 (Figure 2).

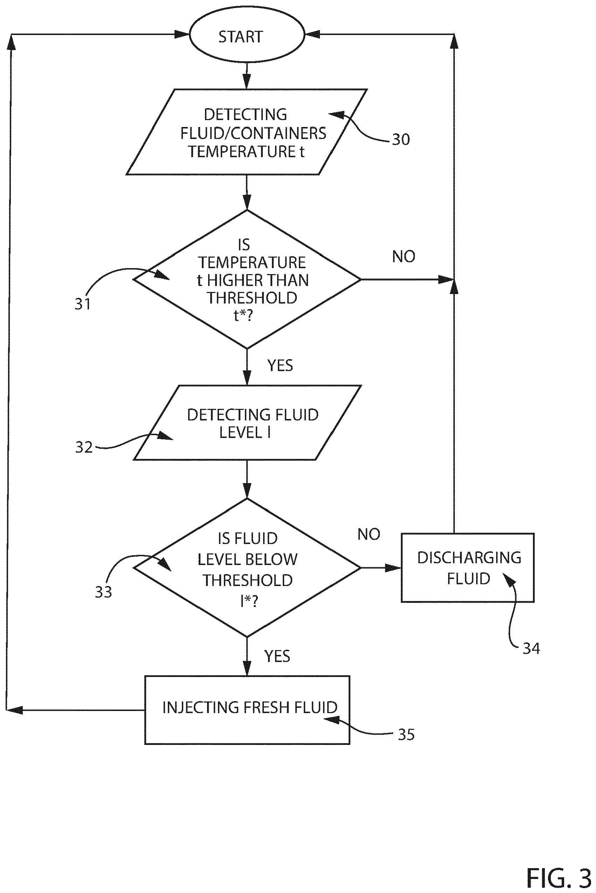

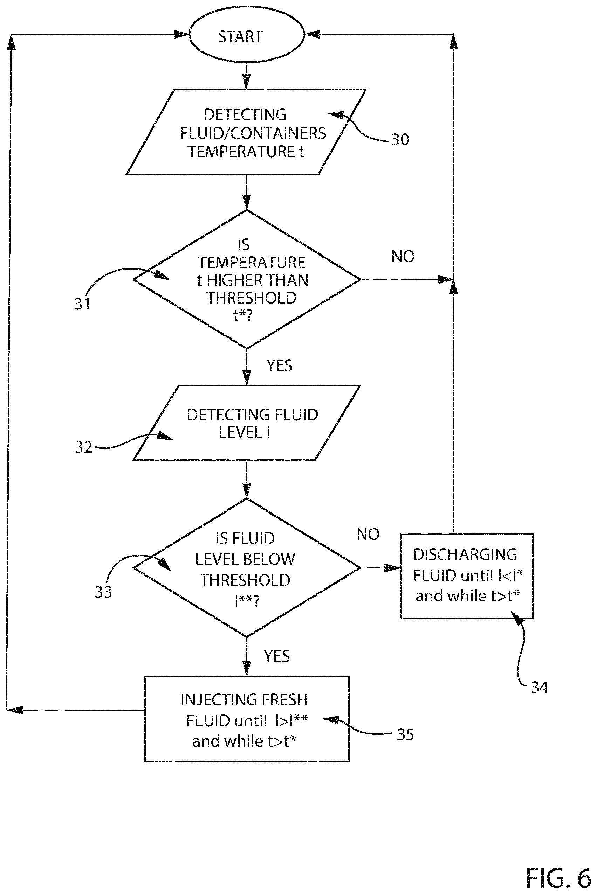

Control unit 11 is configured to set drainage valve 14 in the open configuration if temperature t is outside a desired temperature range and level 1 is within a desired level range; and to set inlet valve 8 in the open configuration if temperature t is outside the desired temperature range and level 1 is outside the desired level range (Figures 3 and 6).

According to one aspect of the invention, control unit 11 is configured to set drainage valve 14 in the closed configuration when inlet valve 8 is in the open configuration.

Control system 100 further comprises a memory 23 configured to store the desired temperature range and the desired level range, with their respective upper and lower thresholds. Memory 23 is operatively connected to control unit 11 (Figures 1 and 2).

In detail, control unit 11 is configured to set drainage valve 14 in the open configuration if temperature t is higher than an upper threshold t* of the desired temperature range and level l is higher than a lower threshold l* of the desired level range (Figure 3). Preferably, if drainage valve 14 is set in the open configuration, control unit 11 is configured to keep drainage valve 14 in such configuration as long as temperature t is higher than upper threshold t* and until level l is lower than lower threshold l* (Figure 6) .

Moreover, control unit 11 is configured to set inlet valve 8 in the open configuration if temperature t is higher than the upper threshold t* of the desired temperature range and level l is lower than the lower threshold l* of the desired level range (Figure 3). Preferably, if inlet valve 8 is set in the open configuration, control unit 11 is configured to keep inlet valve 8 in such open configuration as long as temperature t is higher than upper threshold t* and until level l is greater than an hysteresis level threshold l** of the desired level range (Figure 6), which is greater than lower threshold l* but lower than an upper threshold l*** of the desired level range. In particular, upper threshold l*** corresponds to the maximum amount of processing fluid 6 that can be stored in tank 5c without overflowing.

In addition, control unit 11 is configured to set drainage valve 14 in the open configuration only if level l is greater than hysteresis level threshold l** (Figure 6). As a consequence, if temperature t is higher than the upper threshold t* and level l is higher than lower threshold l* but lower than hysteresis level threshold l**, control unit 11 is configured to keep drainage valve 14 in the closed configuration and to set inlet valve 8 in the open configuration. Also in this case, control unit 11 is preferably configured to keep inlet valve 8 in the open configuration as long as temperature t is higher than upper threshold t* and until level l is greater than hysteresis level threshold l** (Figure 6).

Hysteresis level threshold l** is chosen so as to avoid a rapid and repeated switching of drainage valve 14 and inlet valve 8 between the respective open and closed configurations, which could damage the valves.

In particular, memory 23 is further configured to store the hysteresis level threshold l** of the desired level range.

Alternatively or in addition, control unit 11 is configured to set drainage valve 14 in the open configuration only if a predetermined amount of time has passed since drainage valve 14 was set in the closed configuration.

Heating zone 2 further comprises a biochemical quality detector 15, which is adapted to detect a biochemical quality indicator k of processing fluid 6.

In detail, biochemical quality indicator k may be pH and/or a parameter of the microbial load of processing fluid 6. Accordingly, biochemical quality detector 15 may be a pH meter and/or a microbial load analyzer.

Preferably, biochemical quality detector 15 is arranged inside one of tanks 5a, 5b, 5c of heating zone 2 (Figure 1).

Biochemical quality detector 15 is operatively connected to control unit 11 (Figure 2).

In particular, memory 23 is further configured to store a desired biochemical quality range Δk and control unit 11 is configured to compare biochemical quality indicator k detected by biochemical quality detector 15 with the desired biochemical quality range Δk.

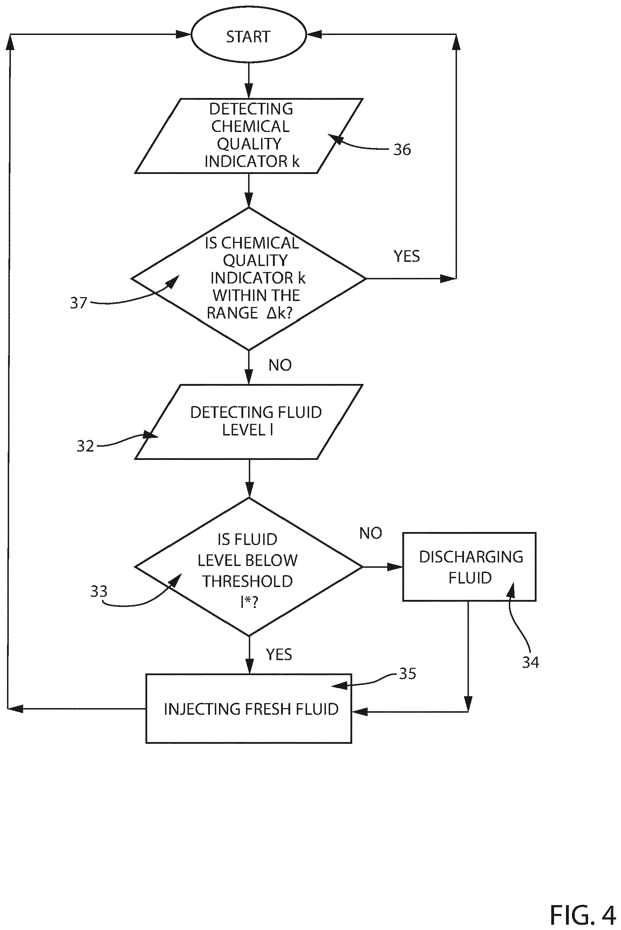

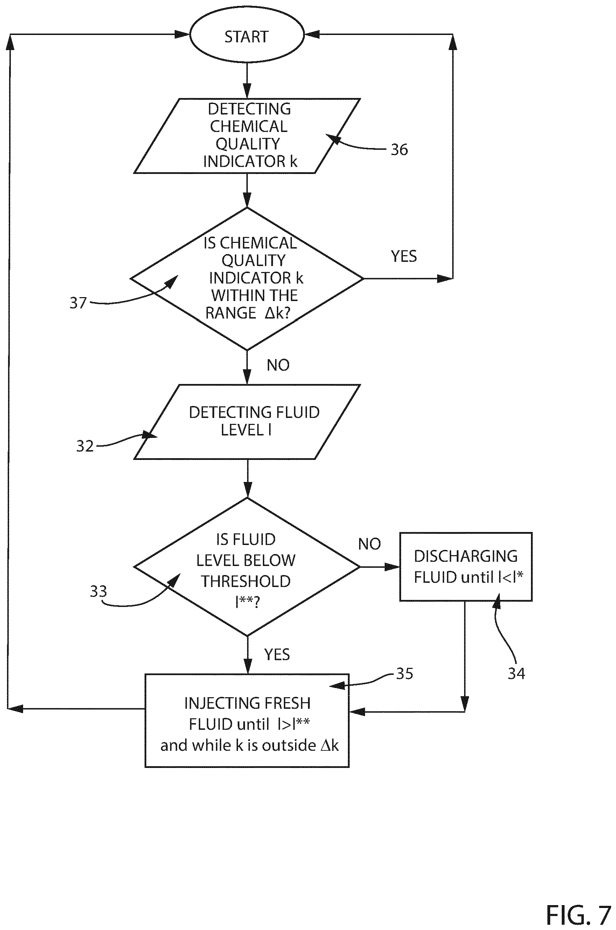

According to a second aspect of the invention, control unit 11 is configured to set drainage valve 14 in the open configuration if biochemical quality indicator k is outside desired biochemical quality range Δk and level l is within the desired level range; and to set inlet valve 8 in the open configuration if biochemical quality indicator k is outside the desired biochemical quality range Δk and level l is outside the desired level range (Figures 4 and 7).

In detail, control unit 11 is configured to set drainage valve 14 in the open configuration and to subsequently set inlet valve 8 in the open configuration if biochemical quality indicator k is outside desired biochemical quality range Δk and level l is higher than the lower threshold l* of the desired level range (Figure 4).

Preferably, if drainage valve 14 is set in the open configuration, control unit 11 is configured to keep drainage valve 14 in such open configuration until level l is lower than lower threshold l* (Figure 7).

In addition, if inlet valve 8 is set in the open configuration, control unit 11 is configured to keep inlet valve 8 in such open configuration as long as biochemical quality indicator k is outside desired biochemical quality range Δk and until level l is greater than hysteresis level threshold l** (Figure 7).

Moreover, control unit 11 is configured to set inlet valve 8 in the open configuration if biochemical quality indicator k is outside desired biochemical quality range Δk and level l is lower than the lower threshold l* of the desired level range (Figure 4).

In addition, even more preferably, control unit 11 is configured to set drainage valve 14 in the open configuration only if level l is greater than hysteresis level threshold l** (Figure 7).

As a consequence, if biochemical quality indicator k is outside desired biochemical quality range Δk and level l is higher than lower threshold l* but lower than hysteresis level threshold l**, control unit 11 is configured to keep drainage valve 14 in the closed configuration and to set inlet valve 8 in the open configuration as long as biochemical quality indicator k is outside desired biochemical quality range Δk and until level l is greater than hysteresis level threshold l**.

Alternatively or in addition, control unit 11 is configured to set drainage valve 14 in the open configuration only if a predetermined amount of time has passed since drainage valve 14 was set in the closed configuration.

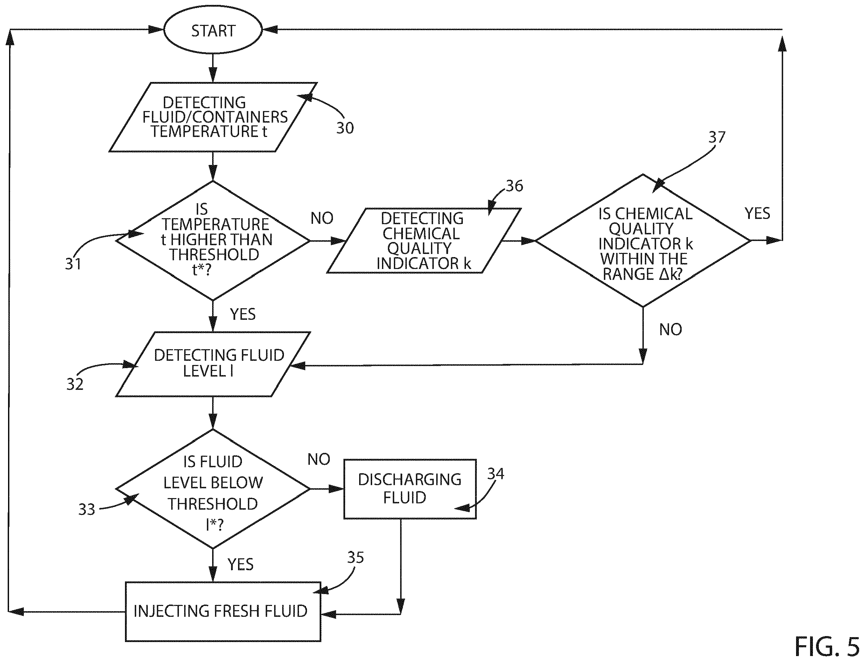

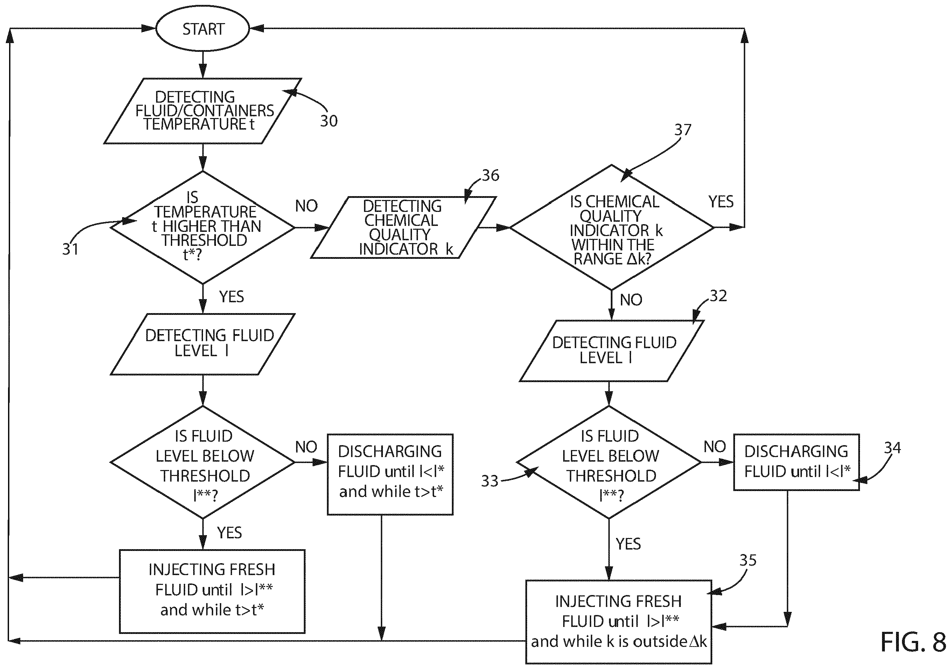

With reference to the embodiment of Figures 5 and 8, control unit 11 is configured to set drainage valve 14 in the open configuration and to subsequently set inlet valve 8 in the open configuration if temperature t is within the desired temperature range, biochemical quality indicator k is outside desired biochemical quality range Δk and level l is within the desired level range.

In detail, control unit 11 is configured to set drainage valve 14 in the open configuration and to subsequently set inlet valve 8 in the open configuration if temperature t is within the desired temperature range, biochemical quality indicator k is outside desired biochemical quality range Δk and level l is higher than the lower threshold l* of the desired level range (Figure 5).

Preferably, if drainage valve 14 is set in the open configuration, control unit 11 is configured to keep drainage valve 14 in such open configuration until level l is lower than lower threshold l* (Figure 8) Furthermore, control unit 11 is also configured to set inlet valve 8 in the open configuration if temperature t is within the desired temperature range, biochemical quality indicator k is outside desired biochemical quality range Δk and level l is outside the desired level range (Figures 5 and 8).

In detail, control unit 11 is configured to set inlet valve 8 in the open configuration if temperature t is within the desired temperature range, biochemical quality indicator k is outside desired biochemical quality range Δk and level l is lower than the lower threshold l* of the desired level range (Figure 5).

Preferably, if inlet valve 8 is set in the open configuration, control unit 11 is configured to keep inlet valve 8 in such open configuration as long as biochemical quality indicator k is outside desired biochemical quality range Δk and until level l is greater than hysteresis level threshold l** (Figure 8).

In addition, even more preferably, control unit 11 is configured to set drainage valve 14 in the open configuration only if level l is greater than hysteresis level threshold l** (Figure 8).

As a consequence, if biochemical quality indicator k is outside desired biochemical quality range Δk and level l is higher than lower threshold l* but lower than hysteresis level threshold l**, control unit 11 is configured to keep drainage valve 14 in the closed configuration and to set inlet valve 8 in the open configuration as long as biochemical quality indicator k is outside desired biochemical quality range Δk and until level 1 is greater than hysteresis level threshold l**.

Alternatively or in addition, control unit 11 is configured to set drainage valve 14 in the open configuration only if a predetermined amount of time has passed since drainage valve 14 was set in the closed configuration.

In use, machine 1 performs periodically (e.g. every two seconds) the determination of temperature t of processing fluid 6 and/or of containers 10 output from cooling zone 4 (step 30) and the comparison between the determined temperature t and the desired temperature range by means of control unit 11 (step 31) (Figures 3 and 6). In this condition, both inlet valve 8 and drainage valve 14 are in their respective closed configurations.

If temperature t is outside the desired temperature range, machine 1 performs the detection of level l of processing fluid 6 inside tank 5c by means of level sensor 13 (step 32) and the comparison between the detected level l and the desired level range by means of control unit 11 (step 33) (Figures 3 and 6).

In detail, if temperature t is higher than the upper threshold t* of the desired temperature range and level l is higher than the lower threshold l* of the desired level range, control unit 11 sets drainage valve 14 in the open configuration, so as to discharge at least part of processing fluid 6 from tank 5c (step 34 of Figure 3).

As a consequence, some processing fluid 6 moves from tanks 5a and 5b towards tank 5c, by virtue of the principle of the communicating vessels. In detail, processing fluid 6 inside tank 5c mixes with some processing fluid 6 from tanks 5b and/or 5a and processing fluid 6 inside tank 5b mixes with some processing fluid 6 from tank 5a.

Since the temperature of processing fluid 6 is higher inside tank 5b than inside tank 5a and the temperature of processing fluid 6 is higher inside tank 5c than inside tank 5b, this may be sufficient to bring temperature t within the desired temperature range (i.e. below upper threshold t*). Otherwise, temperature t will still be detected outside the desired temperature range.

Preferably, inlet valve 8 is set in the closed configuration when drainage valve 14 is in the open configuration.

Preferably, once drainage valve 14 is set in the open configuration, control unit 11 keeps drainage valve 14 in such open configuration as long as temperature t is higher than upper threshold t* and until level l is lower than lower threshold l* (step 34 of Figure 6). In other words, if temperature t becomes lower than upper threshold t* while processing fluid 6 is discharged from drainage valve 14, control unit 11 sets drainage valve 14 back in the closed configuration, even if level l is higher than lower threshold l*. This is possible because machine 1 performs periodically the determination of temperature t and the comparison of the determined temperature with the desired temperature range and the detection of level l and the comparison of the detected level l with the desired level range.

If, on the contrary, temperature t is higher than the upper threshold t* of the desired temperature range and level l is lower than the lower threshold l* of the desired level range, control unit 11 sets inlet valve 8 in the open configuration, so as to allow the injection of fresh processing fluid 9 directly in tank 5a (step 35 of Figure 3) .

Preferably, drainage valve 14 is set in the closed configuration when inlet valve 8 is in the open configuration.

In addition, once inlet valve 8 is set in the open configuration, control unit 11 preferably keeps inlet valve 8 in such open configuration as long as temperature t is higher than upper threshold t* and until level l is greater than hysteresis level threshold l** of the desired level range (step 35 of Figure 6). In other words, if temperature t becomes lower than upper threshold t*, control unit 11 sets inlet valve 8 back in the closed configuration, even if level l is lower than hysteresis level threshold l**.

In addition, preferably, control unit 11 sets drainage valve 14 in the open configuration only if level l is greater than hysteresis level threshold l** (step 33 of Figure 6).

As a consequence, if temperature t is higher than the upper threshold t* and level l is higher than lower threshold 1* but lower than hysteresis level threshold 1**, control unit 11 keeps drainage valve 14 in the closed configuration and sets inlet valve 8 in the open configuration as long as temperature t is higher than upper threshold t* and until level l is greater than hysteresis level threshold l**. Therefore, if temperature t becomes lower than upper threshold t* while fresh processing fluid 9 is injected trough inlet valve 8, control unit 11 sets inlet valve 8 back in the closed configuration, even if level l is lower than hysteresis level threshold l**.

Alternatively or in addition, control unit 11 sets drainage valve 14 in the open configuration only if a predetermined amount of time has passed since drainage valve 14 was set in the closed configuration.

In one embodiment, machine 1 detects periodically (e.g. every two seconds) level l of the processing fluid 6 inside tank 5c (step 32) independently of the determination of temperature t (step 30).

Machine 1 also performs periodically (e.g. every 5 minutes) the detection of biochemical quality indicator k of processing fluid 6 by means of biochemical quality detector 15 (step 36) and the comparison between the detected biochemical quality indicator k and the desired biochemical quality range Δk by means of control unit 11 (step 37) (Figures 4 and 7) .

In detail, the detection of biochemical quality indicator k (step 36) may be carried out independently of the determination of temperature t (step 30).

If the detected biochemical quality indicator k is outside the desired biochemical quality range Δk, machine 1 performs the detection of level l inside tank 5c by means of level sensor 13 (step 32) and the comparison between the detected level l and the desired level range by means of control unit 11 (step 33) (Figures 4 and 7).

In detail, if biochemical quality indicator k is outside the desired biochemical quality range Δk and level l is higher than the lower threshold l* of the desired level range, control unit 11 controls drainage valve 14 in the open configuration, so as to discharge at least part of processing fluid 6 from tank 5c (step 34 of Figure 4).

Preferably, once drainage valve 14 is set in the open configuration, control unit 11 keeps drainage valve 14 in such open configuration until level l is lower than lower threshold l* (step 34 of Figure 7).

Subsequently, control unit 11 controls inlet valve 8 in the open configuration, so as to allow the injection of fresh processing fluid 9 directly in tank 5a (step 35 of Figures 4 and 7).

Preferably, once inlet valve 8 is set in the open configuration, control unit 11 keeps inlet valve 8 in such open configuration as long as biochemical quality indicator k is outside desired biochemical quality range Δk and until level l is greater than hysteresis level threshold l**, which is greater than lower threshold l* (step 35 of Figure 7). In other words, if biochemical quality indicator k moves within desired biochemical quality range Δk while fresh processing fluid 9 is injected trough inlet valve 8, control unit 11 sets inlet valve 8 back in the closed configuration, even if level l is lower than hysteresis level threshold l**.

If, on the contrary, biochemical quality indicator k is outside the desired biochemical quality range Δk and level l is lower than the lower threshold l* of the desired level range, control unit 11 controls inlet valve 8 in the open configuration, so as to allow the injection of fresh processing fluid 9 directly in tank 5a (step 35 of Figure 4) .

In addition, even more preferably, control unit 11 sets drainage valve 14 in the open configuration only if level l is greater than hysteresis level threshold l** (step 33 of Figure 7).

As a consequence, if biochemical quality indicator k is outside desired biochemical quality range Δk and level l is higher than lower threshold l* but lower than hysteresis level threshold l**, control unit 11 is configured to keep drainage valve 14 in the closed configuration and to set inlet valve 8 in the open configuration as long as biochemical quality indicator k is outside desired biochemical quality range Δk and until level l is greater than hysteresis level threshold l**. Therefore, if biochemical quality indicator k moves within desired biochemical quality range Δk while fresh processing fluid 9 is injected through inlet valve 8, control unit 11 sets inlet valve 8 back in the closed configuration, even if level l is lower than hysteresis level threshold l**.

Alternatively or in addition, control unit 11 sets drainage valve 14 in the open configuration only if a predetermined amount of time has passed since drainage valve 14 was set in the closed configuration.

In the embodiment shown in Figures 5 and 8, machine 1 also performs the detection of biochemical quality indicator k of processing fluid 6 (step 36) and the comparison between the detected biochemical quality indicator k and the desired biochemical quality range Δk (step 37) every time machine 1 performs the determination of temperature t (step 30).

Preferably, in the embodiment shown in Figures 5 and 8, the detection of biochemical quality indicator k (step 36) is carried out after the determination of temperature t (step 30) and the comparison between temperature t and the desired temperature range (step 31). Even more preferably, the detection of biochemical quality indicator k (step 36) is carried out if temperature t is within the desired temperature range (step 31) (Figures 5 and 8).

In detail, if temperature t is within the desired temperature range (step 31), biochemical quality indicator k is outside desired biochemical quality range Δk and level l is higher than the lower threshold l* of the desired level range, control unit 11 controls drainage valve 14 in the open configuration, so as to discharge at least part of processing fluid 6 from tank 5c (step 34 of Figure 5).

Preferably, once drainage valve 14 is set in the open configuration, control unit 11 keeps drainage valve 14 in such open configuration until level l is lower than lower threshold l* (step 34 of Figure 8).

Subsequently, control unit 11 controls inlet valve 8 in the open configuration, so as to allow the injection of fresh processing fluid 9 directly in tank 5a (step 35 of Figures 5 and 8).

If, on the contrary, temperature t is within the desired temperature range (step 31), biochemical quality indicator k is outside the desired biochemical quality range Δk and level l is lower than the lower threshold l* of the desired level range, control unit 11 controls inlet valve 8 in the open configuration, so as to allow the injection of fresh processing fluid 9 directly in tank 5a (step 35) (Figure 5).

Preferably, once inlet valve 8 is set in the open configuration, control unit 11 keeps inlet valve 8 in such open configuration as long as biochemical quality indicator k is outside desired biochemical quality range Δk and until level l is greater than hysteresis level threshold l** (step 35 of Figure 8). In other words, if biochemical quality indicator k moves within desired biochemical quality range Δk while fresh processing fluid 9 is injected through inlet valve 8, control unit 11 sets inlet valve 8 back in the closed configuration, even if level l is lower than hysteresis level threshold l**.

In addition, preferably, control unit 11 sets drainage valve 14 in the open configuration only if level l is greater than hysteresis level threshold l** (step 33 of Figure 8).

As a consequence, if biochemical quality indicator k is outside the desired biochemical quality range Δk and level l is higher than lower threshold l* but lower than hysteresis level threshold l**, control unit 11 keeps drainage valve 14 in the closed configuration and sets inlet valve 8 in the open configuration as long as biochemical quality indicator k is outside the desired biochemical quality range Δk and until level l is greater than hysteresis level threshold l**. In other words, if biochemical quality indicator k moves within desired biochemical quality range Δk while fresh processing fluid 9 is injected through inlet valve 8, control unit 11 sets inlet valve 8 back in the closed configuration, even if level l is lower than hysteresis level threshold l**.

Alternatively or in addition, control unit 11 sets drainage valve 14 in the open configuration only if a predetermined amount of time has passed since drainage valve 14 was set in the closed configuration.

The advantages of the control method, control system 100 and method for retrofitting according to the present invention will be clear from the above description.

In particular, since control unit 11 is configured to control drainage valve 14 to discharge at least part of processing fluid 6 from tank 5c, it is possible to control temperature t in an efficient manner, while minimizing the waste of processing fluid 6.

In fact, before injecting fresh processing fluid 9 in tank 5a, some processing fluid 6 is drained through drainage valve 14, if the detected level l is higher than the lower threshold l* or the hysteresis level threshold l** of the desired level range. In this case, the mass and the thermal inertia of processing fluid 6 inside tanks 5a, 5b, 5c is reduced, before any injection of fresh processing fluid 9. Therefore, the amount of fresh processing fluid 9 that needs be injected for the purpose of obtaining a given variation of temperature t is lower than in the known machines discussed in the introductory part of the present description.

Furthermore, since the drainage of processing fluid 6 is carried out before the injection of fresh processing fluid 9 if the detected level l is higher than the lower threshold l*, the biochemical quality of processing fluid 6 is improved. In fact, the fresh processing fluid 9 injected after the drainage mixes with processing fluid 6 having a lower mass than before the drainage.

In addition, since the drainage of processing fluid 6 and the injection of fresh processing fluid 9 may be carried out also on the basis of the detected biochemical quality indicator k, the biochemical quality of processing fluid 6 can be even more accurately controlled during the operation of machine 1. In detail, the detection of biochemical quality indicator k may be carried out in concomitance with the determination of temperature t or independently of it (e.g. periodically).

Furthermore, since the drainage of processing fluid 6 and/or the injection of fresh processing fluid 9 may be carried out as soon as the biochemical quality indicator k is outside the desired biochemical quality range Δk, the complete substitution of processing fluid 6 with fresh processing fluid 9 is required very infrequently or not at all.

The Applicant has also observed that when drainage valve 14 is adapted to allow or prevent the drainage of processing fluid 6 from the downstream-most tank 5c, the reduction of temperature t is particularly efficient.

In fact, when some fluid is discharged from tank 5c, processing fluid 6 inside tank 5c mixes with some processing fluid 6 from tanks 5b and/or 5a and processing fluid 6 inside tank 5b mixes with some processing fluid 6 from tank 5a.

Since the temperature of processing fluid 6 is higher inside tank 5b than inside tank 5a and the temperature of processing fluid 6 is higher inside tank 5c than inside tank 5b, this may be sufficient to bring temperature t within the desired temperature range (i.e. below upper threshold t*). Otherwise, temperature t will still be detected to be outside the desired temperature range.

The reduction of temperature t is even more efficient when inlet valve 8 injects fresh processing fluid 9 directly in the upstream-most collection tank 5a.

The discussed solution may also be easily fitted (with a so called "retrofit" operation) to existing machines, by: arranging inlet valve 8 at machine 1, preferably so as to be adapted to inject fresh processing fluid 9 directly in collection tank 5a; arranging temperature sensor 12 and/or biochemical quality detector 15 at heating zone 2; arranging level sensor 13 in collection tank 5a, 5b, 5c; arranging drainage valve 14 in collection tank 5a, 5b, 5c, preferably in collection tank 5c; operatively connecting level sensor 13, temperature sensor 12 and/or biochemical quality detector 15 to control unit 11; configuring control unit 11 to set drainage valve 14 in the open configuration if temperature t is outside the desired temperature range and/or biochemical quality indicator k is outside the desired biochemical quality range and level l is within the desired level range; and configuring control unit 11 to set inlet valve 8 in the open configuration if temperature t is outside the desired temperature range and/or biochemical quality indicator k is outside the desired biochemical quality range and level l is outside the desired level range.

Furthermore, since control unit 11 is preferably configured to keep inlet valve 8 in the open configuration as long as temperature t is higher than upper threshold t* and until level l is greater than hysteresis level threshold l** and control unit 11 is configured to set drainage valve 14 in the open configuration only if level l is greater than hysteresis level threshold l**, damage to drainage valve 14 and inlet valve 8 caused by the rapid switching between the respective open and closed configurations is avoided.

Since alternatively or in addition, control unit 11 is configured to set drainage valve 14 in the open configuration only if a predetermined amount of time has passed since drainage valve 14 was set in the closed configuration, damage to drainage valve 14 and inlet valve 8 is even less likely.

Finally, it is apparent that modifications and variants not departing from the scope of protection of the claims may be made to control method and system according to the present invention.

In particular, the claimed control method and system may be applied also to heat treatment zone 3 or to cooling zone 4.

In addition, machine 1 may comprise more than one inlet valve 8 and/or more than one drainage valve 14. For example, machine 1 may comprise an inlet valve 8 and/or a drainage valve 14 for each collection tank 5a, 5b, 5c.

Furthermore, heating zone 2 may comprise a plurality of temperature sensors 12, each arranged at a respective collection tank 5a, 5b, 5c. Accordingly, control unit 11 may be operatively connected to the plurality of temperature sensors 12 and configured to compare the temperature detected by each of the temperature sensors 12 with a respective desired temperature range.

Similarly, heating zone 2 may comprise a plurality of biochemical quality detectors 15, each arranged at a respective collection tank 5a, 5b, 5c. Accordingly, control unit 11 may be operatively connected to the plurality of biochemical quality detectors 15 and configured to compare the biochemical quality indicator k detected by each of the biochemical quality detectors 15 with a respective desired biochemical quality range.

## Claims

1. A control method for controlling a machine (1) for the temperature processing of containers (10) of food products; said machine (1) comprising a control unit (11) and at least one temperature-processing zone (2, 3, 4), where the containers (10) are processed by injecting a processing fluid (6) on them; the temperature-processing zone (2, 3, 4) comprising, in turn:
- at least one collection tank (5a, 5b, 5c) for storing said processing fluid (6); and
- an injection assembly (7a, 7b, 7c) for injecting said processing fluid (6) from said at least one collection tank (5a, 5b, 5c) onto said containers (10);
said method comprising the steps of:
i) determining a temperature (t) of said processing fluid (6) by means of a temperature sensor (12) of said machine (1) and/or a temperature (t) of said containers (10);
ii) comparing the temperature (t) determined at said step i) with a desired temperature range by means of said control unit (11);
iii) detecting a level (l) of said processing fluid (6) inside said at least one collection tank (5a, 5b, 5c) by means of a level sensor (13) of said machine (1);
iv) comparing the level (l) detected at said step iii) with a desired level range by means of said control unit (11) ;
v) controlling by means of said control unit (11) a drainage valve (14) of said at least one collection tank (5a, 5b, 5c) to discharge at least part of the processing fluid (6) from said at least one collection tank (5a, 5b, 5c), if the temperature (t) determined at step i) is outside said desired temperature range and the level (l) detected at step iii) is within said desired level range; and
vi) controlling by means of said control unit (11) an inlet valve (8) of said machine (1) to allow the injection of fresh processing fluid (9) from outside said machine (1) in said at least one collection tank (5a, 5b, 5c), if the temperature (t) determined at step i) is outside said desired temperature range and the level (l) detected at step iii) is outside said desired level range;
whereby during said step v) said control unit (11) controls said drainage valve (14) to discharge at least part of the processing fluid (6) from said at least one collection tank (5a, 5b, 5c), if the temperature (t) determined at step i) is higher than an upper temperature threshold (t*) of said desired temperature range and the level (l) detected at step iii) is higher than a lower level threshold (l*; l**) of said desired level range; and in that during said step vi) said control unit (11) controls said inlet valve (8) to allow the injection of fresh processing fluid (9) from outside said machine (1) in said at least one collection tank (5a, 5b, 5c), if the temperature (t) determined at step i) is higher than said upper temperature threshold (t*) and the level (l) detected at step iii) is lower than said lower level threshold (l*; 1**),
**characterized in that** during said step v) said control unit (11) controls said drainage valve (14) to discharge at least part of the processing fluid (6) from said at least one collection tank (5a, 5b, 5c), if the temperature (t) determined at step i) is higher than said upper temperature threshold (t*) of said desired temperature range and the level (l) detected at step iii) is higher than an hysteresis level threshold (l**) of said desired level range; said hysteresis level threshold (l**) being greater than said lower level threshold (l*); and **in that** during said step vi) said control unit (11) controls said inlet valve (8) to allow the injection of fresh processing fluid (9) from outside said machine (1) in said at least one collection tank (5a, 5b, 5c) if the temperature (t) determined at step i) is higher than said upper temperature threshold (t*) of said desired temperature range and the level (l) detected at step iii) is lower than said hysteresis level threshold (l**).

2. The control method according to claim 1, **characterized in** said step v) comprises the step vii) of controlling said drainage valve (14) by means of said control unit (11) to discharge the processing fluid (6) from said at least one collection tank (5a, 5b, 5c) until said level (l) is lower than said lower level threshold (l*); and **in that** said step vi) comprises the step viii) of controlling said inlet valve (8) by means of said control unit (11) to allow the injection of fresh processing fluid (9) from outside said machine (1) in said at least one collection tank (5a, 5b, 5c) until said level (l) is higher than said hysteresis level threshold (l**).

3. The control method according to claim 2, **characterized by** comprising the further steps of:
ix) preventing by means of said control unit (11) said drainage valve (14) from discharging processing fluid (6) from said at least one collection tank (5a, 5b, 5c), if during said step vii) said temperature (t) of said processing fluid (6) and/or said temperature (t) of said containers (10) becomes lower than said upper temperature threshold (t*) ;
x) preventing by means of said control unit (11) said inlet valve (8) from allowing the injection of fresh processing fluid (9) in said at least one collection tank (5a, 5b, 5c), if during said step viii) said temperature (t) of said processing fluid (6) and/or said temperature (t) of said containers (10) becomes lower than said upper temperature threshold (t*).

4. The control method according to claims 1 to 3, **characterized in that** said step v) comprises the further step xi) of controlling by means of said control unit (11) a drainage valve (14) of a downstream-most collection tank (5c) of said temperature-processing zone (2, 3, 4) according to a movement path (P) of said containers (1) along said machine (1), to discharge at least part of the processing fluid (6) from said downstream-most collection tank (5c); said temperature-processing zone (2, 3, 4) comprising a plurality of said collection tanks (5a, 5b, 5c), each being in fluidic communication with the other tanks (5a, 5b, 5c) of the same temperature-processing zone (2, 3, 4).

5. The control method according to claim 4, **characterized in that** said step vi) comprises the further step xii) of controlling by means of said control unit (11) said inlet valve (8) to allow the injection of fresh processing fluid (9) directly in an upstream-most collection tank (5a) of said temperature-processing zone (2, 3, 4) according to said movement path (P).

6. The control method according to any one of the foregoing claims, **characterized by** comprising the further steps of:
xiii) detecting a biochemical quality indicator (k) of said processing fluid (6) by means of a biochemical quality detector (15) of said machine (1); and
xiv) comparing the biochemical quality indicator (k) detected at said step xiii) with a desired biochemical quality range (Δk) by means of said control unit (11);
xv) controlling by means of said control unit (11) said drainage valve (14) to discharge at least part of the processing fluid (6) from said at least one collection tank (5a, 5b, 5c), if the biochemical quality indicator (k) detected at step xiii) is outside said desired biochemical quality range (Δk) and the level (l) detected at step iii) is within said desired level range; and subsequently controlling by means of said control unit (11) said inlet valve (8) to allow the injection of fresh processing fluid (9) in said at least one collection tank (5a, 5b, 5c); and
xvi) controlling by means of said control unit (11) said inlet valve (8) to allow the injection of fresh processing fluid (9) in said at least one collection tank (5a, 5b, 5c), if the biochemical quality indicator (k) detected at step xiii) is outside said desired biochemical quality range (Δk) and the level (l) detected at step iii) is outside said desired level range.

7. The control method according to claim 6, **characterized in that** said steps xv) and xvi) are carried out if the temperature (t) determined at step i) is within said desired temperature range.

8. A control method for controlling a machine (1) for the temperature processing of containers (10) of food products; said machine (1) comprising a control unit (11), at least one temperature-processing zone (2, 3, 4), where the containers (10) are processed by injecting a processing fluid (6) on them; the temperature-processing zone (2, 3, 4) comprising, in turn:
- at least one collection tank (5a, 5b, 5c) for storing said processing fluid (6); and
- an injection assembly (7a, 7b, 7c) for injecting said processing fluid (6) from said at least one collection tank (5a, 5b, 5c) onto said containers (10);
said method being **characterized by** comprising the steps of:
i) detecting a biochemical quality indicator (k) of said processing fluid (6) by means of a biochemical quality detector (15) of said machine (1);
ii) comparing the biochemical quality indicator (k) detected at said step i) with a desired biochemical quality range (Δk) by means of said control unit (11);
iii) detecting a level (l) of said processing fluid (6) inside said at least one collection tank (5a, 5b, 5c) by means of a level sensor (13) of said machine (1);
iv) comparing the level (l) detected at said step iii) with a desired level range by means of said control unit (11) ;
v) controlling by means of said control unit (11) a drainage valve (14) of said at least one collection tank (5a, 5b, 5c) to discharge at least part of the processing fluid (6) from said at least one collection tank (5a, 5b, 5c), if the biochemical quality indicator (k) detected at step i) is outside said desired biochemical quality range (Δk) and the level (l) detected at step iii) is within said desired level range; and subsequently controlling by means of said control unit (11) an inlet valve (8) of said machine (1) to allow the injection of fresh processing fluid (9) from outside said machine (1) in said at least one collection tank (5a, 5b, 5c); and
vi) controlling by means of said control unit (11) an inlet valve (8) of said machine (1) to allow the injection of fresh processing fluid (9) from outside said machine (1) in said at least one collection tank (5a, 5b, 5c), if the biochemical quality indicator (k) detected at step i) is outside said desired biochemical quality range (Δk) and the level (l) detected at step iii) is outside said desired level range.

9. A control system (100) for controlling a machine (1) for the temperature processing of containers (10) of food products; said machine (1) comprising at least one temperature-processing zone (2, 3, 4), where containers (10) are processed by injecting a processing fluid (6) on them; said temperature-processing zone (2, 3, 4) comprising, in turn:
- at least one collection tank (5a, 5b, 5c) for storing said processing fluid (6);
- an injection assembly (7a, 7b, 7c) for injecting said processing fluid (6) from said at least one collection tank (5a, 5b, 5c) onto said containers (10); and
- an inlet valve (8) controllable in an open configuration, in which it allows the inlet of a fresh processing fluid (9) from outside said machine (1), or in a closed configuration, in which it prevents fresh processing fluid (9) from being inlet inside said machine (1);
said temperature-processing zone (2, 3, 4) further comprising:
- a temperature sensor (12) adapted to detect a temperature (t) of said processing fluid (6);
- a level sensor (13) adapted to detect a level (l) of the processing fluid (6) inside said at least one collection tank (5a, 5b, 5c); and
- a drainage valve (14) controllable in an open configuration, in which it allows the drainage of at least part of the processing fluid (6) from said at least one collection tank (5a, 5b, 5c), or in a closed configuration, in which it prevents the drainage of the processing fluid (6) from said at least one collection tank (5a, 5b, 5c);
said control system (100) comprising a control unit (11) operatively connected to said machine (1);
said control unit (11) being configured to compare the temperature (t) determined by said temperature sensor (12) and/or a temperature (t) of said containers (10) with a desired temperature range and compare the level (l) detected by said level sensor (13) with a desired level range;
said control unit (11) is configured to set, in use, said drainage valve (14) in said open configuration if the temperature (t) of the processing fluid (6) and/or the temperature (t) of said containers (10) is outside said desired temperature range and the level (l) is within said desired level range;
said control unit (11) being further configured to set, in use, said inlet valve (8) in said open configuration if the temperature (t) of the processing fluid (6) and/or the temperature (t) of said containers (10) is outside said desired temperature range and the level (l) is outside said desired level range,
whereby
said control unit (11) is configured to set, in use, said drainage valve (14) in said open configuration if the temperature (t) of the processing fluid (6) and/or the temperature (t) of said containers (10) is higher than an upper temperature threshold (t*) of said desired temperature range and the level (l) is higher than a lower level threshold (l*, l**) of said desired level range;
said control unit (11) being further configured to set, in use, said inlet valve (8) in said open configuration if the temperature (t) of the processing fluid (6) and/or the temperature (t) of said containers (10) is higher than said upper temperature threshold (t*) and the level (l) is lower than said lower level threshold (l*, l**);and
the control system is **characterized in that** said control unit (11) is configured to set, in use, said drainage valve (14) in said open configuration if the temperature (t) of the processing fluid (6) and/or the temperature (t) of said containers (10) is higher than an upper temperature threshold (t*) of said desired temperature range and the level (l) is higher than an hysteresis level threshold (l**) of said desired level range; said hysteresis level threshold (l**) being greater than said lower level threshold (l*);
said control unit (11) being further configured to set, in use, said inlet valve (8) in said open configuration if the temperature (t) of the processing fluid (6) and/or the temperature (t) of said containers (10) is higher than said upper temperature threshold (t*) and the level (l) is lower than said hysteresis level threshold (l**).

10. The control system according to claim 9, **characterized in that** said control unit (11) is configured to keep said drainage valve (14) in said open configuration until, in use, said level (l) lower than said lower level threshold (l*) unless, in use, said temperature (t) of said processing fluid (6) and/or said temperature (t) of said containers (10) becomes lower than said upper temperature threshold (t*);
and **in that** said control unit (11) is configured to keep said inlet valve (8) in said open configuration until, in use, said level (l) is greater than said hysteresis level threshold (l**) unless, in use, said temperature (t) of said processing fluid (6) and/or said temperature (t) of said containers (10) becomes lower than said upper temperature threshold (t*).

11. The control system according to claims 9 to 10, wherein said temperature-processing zone (2, 3, 4) comprises a plurality of collection tanks (5a, 5b, 5c); each tank (5a, 5b, 5c) being in fluidic communication with the other tanks (5a, 5b, 5c) of the same temperature-processing zone (2, 3, 4) ;
**characterized in that** said control unit (11) is further configured to control said drainage valve (14) of the downstream-most collection tank (5c) of said temperature-processing zone (2, 3, 4) according to a movement path (P) of said containers (10) along said machine (1).

12. The control system according to claim 11, **characterized in that** said control unit (11) is further configured to set said inlet valve (8) in said open configuration, so as to allow the injection of fresh processing fluid (9) directly in the upstream-most collection tank (5a) of said temperature-processing zone (2, 3, 4) according to said movement path (P).

13. The control system according to claims 9 to 12, wherein said temperature-processing zone (2, 3, 4) further comprises a biochemical quality detector (15), which is adapted to detect a biochemical quality indicator (k) of said processing fluid (6);
**characterized in that** said control unit (11) is further configured to compare, in use, said biochemical quality indicator (k) with a desired biochemical quality range (Δk).

14. A machine (1) for the temperature processing of containers (10) for food products comprising at least one temperature-processing zone (2, 3, 4), where the containers (10) are processed by injecting a processing fluid (6) on them; said temperature processing-zone (2, 3, 4) comprising:
- at least one collection tank (5a, 5b, 5c) for storing said processing fluid (6);
- an injection assembly (7a, 7b, 7c) for injecting said processing fluid (6) from said at least one collection tank (5a, 5b, 5c) onto said containers (10); and
- an inlet valve (8) controllable in an open configuration, in which it allows the inlet of fresh processing fluid (9) from outside said machine (1), or in a closed configuration, in which it prevents fresh processing fluid (9) from being inlet inside said machine (1);
said temperature-processing zone (2, 3, 4) further comprising:
- a temperature sensor (12) adapted to detect a temperature (t) of the processing fluid (6);
- a level sensor (13) adapted to detect a level of the processing fluid (6) inside said at least one collection tank (5a, 5b, 5c); and
- a drainage valve (14) controllable in an open configuration, in which it allows the drainage of at least part of the processing fluid (6) from said at least one collection tank (5a, 5b, 5c), or in a closed configuration, in which it prevents the drainage of the processing fluid (6) from said at least one collection tank (5a, 5b, 5c);
**characterized by** comprising a control system (100) according to any one of claims 9 to 13 .

## Patentansprüche

1. Steuerungsverfahren zum Steuern einer Maschine (1) zur Temperaturverarbeitung von Behältern (10) für Lebensmittelprodukte; wobei die Maschine (1) eine Steuereinheit (11) und mindestens eine Temperaturverarbeitungszone (2, 3, 4) umfasst, in der die Behälter (10) durch Einspritzen einer Verarbeitungsflüssigkeit (6) auf sie bearbeitet werden; wobei die Temperaturverarbeitungszone (2, 3, 4) ihrerseits umfasst:
- mindestens einen Sammeltank (5a, 5b, 5c) zum Lagern der Verarbeitungsflüssigkeit (6); und
- eine Einspritzanordnung (7a, 7b, 7c) zum Einspritzen der Verarbeitungsflüssigkeit (6) aus dem mindestens einen Sammeltank (5a, 5b, 5c) auf die Behälter (10) ;
wobei das Verfahren die folgenden Schritte umfasst:
i) Bestimmen einer Temperatur (t) der Verarbeitungsflüssigkeit (6) mittels eines Temperatursensors (12) der Maschine (1) und/oder einer Temperatur (t) der Behälter (10);
ii) Vergleichen der in Schritt i) bestimmten Temperatur (t) mit einem gewünschten Temperaturbereich mittels der Steuereinheit (11);
iii) Erfassen eines Füllstands (1) der Verarbeitungsflüssigkeit (6) in dem mindestens einen Sammeltank (5a, 5b, 5c) mittels eines Füllstandssensors (13) der Maschine (1);
iv) Vergleichen des in Schritt iii) bestimmten Füllstands (1) mit einem gewünschten Füllstandsbereich mittels der Steuereinheit (11);
v) Steuern eines Ablassventils (14) des mindestens einen Sammeltanks (5a, 5b, 5c) mittels der Steuereinheit (11), um mindestens einen Teil der Verarbeitungsflüssigkeit (6) aus dem mindestens einen Sammeltank (5a, 5b, 5c) abzulassen, wenn die in Schritt i) bestimmte Temperatur (t) außerhalb des gewünschten Temperaturbereichs liegt und der in Schritt iii) erfasste Füllstand (1) innerhalb des gewünschten Füllstandsbereichs liegt; und
vi) Steuern eines Einlassventils (8) der Maschine (1) mittels der Steuereinheit (11), um das Einspritzen von frischer Verarbeitungsflüssigkeit (9) von außerhalb der Maschine (1) in den mindestens einen Sammeltank (5a, 5b, 5c) zu ermöglichen, wenn die in Schritt i) bestimmte Temperatur (t) außerhalb des gewünschten Temperaturbereichs liegt und der in Schritt iii) bestimmte Füllstand (1) außerhalb des gewünschten Füllstandsbereichs liegt;
wobei während des Schritts v) die Steuereinheit (11) das Ablassventil (14) steuert, um mindestens einen Teil der Verarbeitungsflüssigkeit (6) aus dem mindestens einen Sammelbehälter (5a, 5b, 5c) abzulassen, wenn die in Schritt i) bestimmte Temperatur (t) höher als ein oberer Temperaturschwellenwert (t*) des gewünschten Temperaturbereichs ist und der in Schritt iii) erfasste Füllstand (1) höher als ein unterer Füllstandsschwellenwert (l*; l**) des gewünschten Füllstandsbereichs ist; und wobei während des Schritts vi) die Steuereinheit (11) das Einlassventil (8) steuert, um das Einspritzen von frischer Verarbeitungsflüssigkeit (9) von außerhalb der Maschine (1) in dem mindestens einen Sammeltank (5a, 5b, 5c) zu ermöglichen, wenn die in Schritt i) bestimmte Temperatur (t) höher als der obere Temperaturschwellenwert (t*) ist und der in Schritt iii) erfasste Füllstand (1) niedriger als der untere Füllstandsschwellenwert (l*; l**) ist,
**dadurch gekennzeichnet, dass** während des Schritts v) die Steuereinheit (11) das Ablassventil (14) steuert, um mindestens einen Teil der Verarbeitungsflüssigkeit (6) aus dem mindestens einen Sammeltank (5a, 5b, 5c) abzulassen, wenn die in Schritt i) bestimmte Temperatur (t) höher als der obere Temperaturschwellenwert (t*) des gewünschten Temperaturbereichs ist und der in Schritt iii) erfasste Füllstand (1) höher als ein Hysteresefüllstandsschwellenwert (l**) des gewünschten Füllstandsbereichs ist; wobei der Hysteresefüllstandsschwellenwert (l**) größer als der untere Füllstandsschwellenwert (l*) ist; und dass während des Schritts vi) die Steuereinheit (11) das Einlassventil (8) steuert, um das Einspritzen von frischer Verarbeitungsflüssigkeit (9) von außerhalb der Maschine (1) in dem mindestens einen Sammeltank (5a, 5b, 5c) zu ermöglichen, wenn die in Schritt i) bestimmte Temperatur (t) höher als der obere Temperaturschwellenwert (t*) des gewünschten Temperaturbereichs ist und der in Schritt iii) erfasste Füllstand (1) niedriger als der Hysteresefüllstandsschwellenwert (l**) ist.

2. Steuerungsverfahren gemäß Anspruch 1, **dadurch gekennzeichnet, dass** der Schritt v) den Schritt vii) des Steuerns des Ablassventils (14) mittels der Steuereinheit (11) umfasst, um die Verarbeitungsflüssigkeit (6) aus dem mindestens einen Sammeltank (5a, 5b, 5c) abzulassen, bis der Füllstand (1) niedriger als der untere Füllstandsschwellenwert (l*) ist; und dass der Schritt vi) den Schritt viii) des Steuerns des Einlassventils (8) mittels der Steuereinheit (11) umfasst, um das Einspritzen von frischer Verarbeitungsflüssigkeit (9) von außerhalb der Maschine (1) in dem mindestens einen Sammeltank (5a, 5b, 5c) zu ermöglichen, bis der Füllstand (1) höher als der Hysteresefüllstandsschwellenwert (l**) ist.

3. Steuerungsverfahren gemäß Anspruch 2, **dadurch gekennzeichnet, dass** es die folgenden weiteren Schritte umfasst:
ix) Verhindern mittels der Steuereinheit (11), dass das Ablassventil (14) Verarbeitungsflüssigkeit (6) aus dem mindestens einen Sammeltank (5a, 5b, 5c) ablässt, wenn während des Schritts vii) die Temperatur (t) der Verarbeitungsflüssigkeit (6) und/oder die Temperatur (t) der Behälter (10) niedriger als der obere Temperaturschwellenwert (t*) wird;
x) Verhindern mittels der Steuereinheit (11), dass das Einlassventil (8) das Einspritzen von frischer Verarbeitungsflüssigkeit (9) in dem mindestens einen Sammeltank (5a, 5b, 5c) zulässt, wenn während des Schritts viii) die Temperatur (t) der Verarbeitungsflüssigkeit (6) und/oder die Temperatur (t) der Behälter (10) niedriger als der obere Temperaturschwellenwert (t*) wird.

4. Steuerungsverfahren gemäß einem der Ansprüche 1 bis 3, **dadurch gekennzeichnet, dass** der Schritt v) den weiteren Schritt xi) des Steuerns eines Ablassventils (14) eines stromabwärts gelegenen Sammeltanks (5c) der Temperaturverarbeitungszone (2, 3, 4) mittels der Steuereinheit (11) gemäß einem Bewegungsweg (P) der Behälter (1) entlang der Maschine (1) umfasst, um mindestens einen Teil der Verarbeitungsflüssigkeit (6) aus dem stromabwärts gelegenen Sammeltank (5c) abzulassen; wobei die Temperaturverarbeitungszone (2, 3, 4) eine Vielzahl von Sammeltanks (5a, 5b, 5c) umfasst, von denen jeder in Fluidverbindung mit den anderen Tanks (5a, 5b, 5c) derselben Temperaturverarbeitungszone (2, 3, 4) steht.

5. Steuerungsverfahren gemäß Anspruch 4, **dadurch gekennzeichnet, dass** der Schritt vi) den weiteren Schritt xii) des Steuerns des Einlassventils (8) mittels der Steuereinheit (11) umfasst, um das Einspritzen von frischer Verarbeitungsflüssigkeit (9) direkt in einem stromaufwärts gelegenen Sammeltank (5a) der Temperaturverarbeitungszone (2, 3, 4) gemäß dem Bewegungsweg (P) zu ermöglichen.

6. Steuerungsverfahren gemäß Anspruch einem der vorhergehenden Ansprüche, **dadurch gekennzeichnet, dass** es die folgenden weiteren Schritte umfasst:
xiii) Erfassen eines biochemischen Qualitätsindikators (k) der Verarbeitungsflüssigkeit (6) mittels eines biochemischen Qualitätsdetektors (15) der Maschine (1); und
xiv) Vergleichen des in Schritt xiii) bestimmten biochemischen Qualitätsindikators (k) mit einem gewünschten biochemischen Qualitätsbereich (Δk) mittels der Steuereinheit (11);
xv) Steuern des Ablassventils (14) mittels der Steuereinheit (11), um mindestens einen Teil der Verarbeitungsflüssigkeit (6) aus dem mindestens einen Sammeltank (5a, 5b, 5c) abzulassen, wenn der in Schritt xiii) erfasste biochemische Qualitätsindikator (k) außerhalb des gewünschten biochemischen Qualitätsbereichs (Δk) liegt und der in Schritt iii) erfasste Füllstand (1) innerhalb des gewünschten Füllstandbereichs liegt; und anschließendes Steuern des Einlassventils (8) mittels der Steuereinheit (11), um das Einspritzen von frischer Verarbeitungsflüssigkeit (9) in dem mindestens einen Sammeltank (5a, 5b, 5c) zu ermöglichen; und
xvi) Steuern des Einlassventils (8) mittels der Steuereinheit (11), um das Einspritzen von frischer Verarbeitungsflüssigkeit (9) in dem mindestens einen Sammeltank (5a, 5b, 5c) zu ermöglichen, wenn der in Schritt xiii) erfasste biochemische Qualitätsindikator (k) außerhalb des gewünschten biochemischen Qualitätsbereichs (Δk) und der in Schritt iii) erfasste Füllstand (1) außerhalb des gewünschten Füllstandsbereichs liegt.

7. Steuerungsverfahren gemäß Anspruch 6, **dadurch gekennzeichnet, dass** die Schritte xv) und xvi) durchgeführt werden, wenn die in Schritt i) bestimmte Temperatur (t) innerhalb des gewünschten Temperaturbereichs liegt.

8. Steuerungsverfahren zum Steuern einer Maschine (1) für die Temperaturverarbeitung von Behältern (10) für Lebensmittelprodukte; wobei die Maschine (1) eine Steuereinheit (11), mindestens eine Temperaturverarbeitungszone (2, 3, 4) umfasst, in der die Behälter (10) durch Einspritzen einer Verarbeitungsflüssigkeit (6) auf sie behandelt werden; wobei die Temperaturverarbeitungszone (2, 3, 4) ihrerseits umfasst:
- mindestens einen Sammeltank (5a, 5b, 5c) zum Lagern der Verarbeitungsflüssigkeit (6); und
- eine Einspritzanordnung (7a, 7b, 7c) zum Einspritzen der Verarbeitungsflüssigkeit (6) aus dem mindestens einen Sammeltank (5a, 5b, 5c) auf die Behälter (10) ;
wobei das Verfahren **dadurch gekennzeichnet ist, dass** es die folgenden Schritte umfasst:
i) Erfassen eines biochemischen Qualitätsindikators (k) der Verarbeitungsflüssigkeit (6) mittels eines biochemischen Qualitätsdetektors (15) der Maschine (1);
ii) Vergleichen des in Schritt i) erfassten biochemischen Qualitätsindikators (k) mit einem gewünschten biochemischen Qualitätsbereich (Δk) mittels der Steuereinheit (11);
iii) Erfassen eines Füllstands (1) der Verarbeitungsflüssigkeit (6) in dem mindestens einen Sammeltank (5a, 5b, 5c) mittels eines Füllstandssensors (13) der Maschine (1);
iv) Vergleichen des in Schritt iii) bestimmten Füllstands (1) mit einem gewünschten Füllstandsbereich mittels der Steuereinheit (11);
v) Steuern eines Ablassventils (14) des mindestens einen Sammeltanks (5a, 5b, 5c) mittels der Steuereinheit (11), um mindestens einen Teil der Verarbeitungsflüssigkeit (6) aus dem mindestens einen Sammeltank (5a, 5b, 5c) abzulassen, wenn der in Schritt i) erfasste biochemische Qualitätsindikator (k) außerhalb des gewünschten biochemischen Qualitätsbereichs (Δk) liegt und der in Schritt iii) erfasste Füllstand (1) innerhalb des gewünschten Füllstandsbereichs liegt; und anschließendes Steuern eines Einlassventils (8) der Maschine (1) mittels der Steuereinheit (11), um das Einspritzen von frischer Verarbeitungsflüssigkeit (9) von außerhalb der Maschine (1) in dem mindestens einen Sammeltank (5a, 5b, 5c) zu ermöglichen; und
vi) Steuern eines Einlassventils (8) der Maschine (1) mittels der Steuereinheit (11), um das Einspritzen von frischer Verarbeitungsflüssigkeit (9) von außerhalb der Maschine (1) in dem mindestens einen Sammeltank (5a, 5b, 5c) zu ermöglichen, wenn der in Schritt i) erfasste biochemische Qualitätsindikator (k) außerhalb des gewünschten biochemischen Qualitätsbereichs (Δk) und der in Schritt iii) erfasste Füllstand (1) außerhalb des gewünschten Füllstandsbereichs liegt.

9. Steuerungssystem (100) zum Steuern einer Maschine (1) zur Temperaturverarbeitung von Behältern (10) für Lebensmittelprodukte; wobei die Maschine (1) mindestens eine Temperaturverarbeitungszone (2, 3, 4) umfasst, in der Behälter (10) durch Einspritzen einer Verarbeitungsflüssigkeit (6) auf sie verarbeitet werden; wobei die Temperaturverarbeitungszone (2, 3, 4) ihrerseits umfasst:
- mindestens einen Sammeltank (5a, 5b, 5c) zum Lagern der Verarbeitungsflüssigkeit (6);
- eine Einspritzanordnung (7a, 7b, 7c) zum Einspritzen der Verarbeitungsflüssigkeit (6) aus dem mindestens einen Sammeltank (5a, 5b, 5c) auf die Behälter (10); und
- ein Einlassventil (8), das in eine geöffnete Konfiguration, in der es den Einlass einer frischen Verarbeitungsflüssigkeit (9) von außerhalb der Maschine (1) ermöglicht, oder in eine geschlossene Konfiguration steuerbar ist, in der es den Einlass von frischer Verarbeitungsflüssigkeit (9) innerhalb der Maschine (1) verhindert;
wobei die Temperaturverarbeitungszone (2, 3, 4) ferner umfasst:
- einen Temperatursensor (12), der dazu eingerichtet ist, eine Temperatur (t) der Bearbeitungsflüssigkeit (6) zu erfassen;
- einen Füllstandssensor (13), der dazu eingerichtet ist, einen Füllstand (1) der Verarbeitungsflüssigkeit (6) in dem mindestens einen Sammeltank (5a, 5b, 5c) zu erfassen; und
- ein Ablassventil (14), das in eine geöffnete Konfiguration, in der es das Ablassen von mindestens einem Teil der Verarbeitungsflüssigkeit (6) aus dem mindestens einen Sammeltank (5a, 5b, 5c) ermöglicht, oder in eine geschlossene Konfiguration steuerbar ist, in der es das Ablassen der Verarbeitungsflüssigkeit (6) aus dem mindestens einen Sammeltank (5a, 5b, 5c) verhindert;
wobei das Steuerungssystem (100) eine Steuereinheit (11) umfasst, die mit der Maschine (1) wirkverbunden ist;
wobei die Steuereinheit (11) dazu ausgelegt ist, die durch den Temperatursensor (12) bestimmte Temperatur (t) und/oder eine Temperatur (t) der Behälter (10) mit einem gewünschten Temperaturbereich zu vergleichen und den durch den Füllstandssensor (13) erfassten Füllstand (1) mit einem gewünschten Füllstandsbereich zu vergleichen;
die Steuereinheit (11) dazu ausgelegt ist, im Gebrauch das Ablassventil (14) in die geöffnete Konfiguration zu stellen, wenn die Temperatur (t) der Verarbeitungsflüssigkeit (6) und/oder die Temperatur (t) der Behälter (10) außerhalb des gewünschten Temperaturbereichs liegt und der Füllstand (1) innerhalb des gewünschten Füllstandsbereichs liegt;
wobei die Steuereinheit (11) ferner dazu ausgelegt ist, im Gebrauch das Einlassventil (8) in die geöffnete Konfiguration zu stellen, wenn die Temperatur (t) der Verarbeitungsflüssigkeit (6) und/oder die Temperatur (t) der Behälter (10) außerhalb des gewünschten Temperaturbereichs liegt und der Füllstand (1) außerhalb des gewünschten Füllstandsbereichs liegt, wodurch
die Steuereinheit (11) dazu ausgelegt ist, im Gebrauch das Ablassventil (14) in die geöffnete Konfiguration zu stellen, wenn die Temperatur (t) der Verarbeitungsflüssigkeit (6) und/oder die Temperatur (t) der Behälter (10) höher als ein oberer Temperaturschwellenwert (t*) des gewünschten Temperaturbereichs und der Füllstand (1) höher als ein unterer Füllstandsschwellenwert (l*, l**) des gewünschten Füllstandsbereichs ist;
wobei die Steuereinheit (11) ferner dazu ausgelegt ist, im Betrieb das Einlassventil (8) in die geöffnete Konfiguration zu stellen, wenn die Temperatur (t) der Verarbeitungsflüssigkeit (6) und/oder die Temperatur (t) der Behälter (10) höher als der obere Temperaturschwellenwert (t*) und der Füllstand (1) niedriger als der untere Füllstandsschwellenwert (l*, l**) ist; und
das Steuerungssystem **dadurch gekennzeichnet ist, dass** die Steuereinheit (11) dazu ausgelegt ist, im Gebrauch das Ablassventil (14) in die geöffnete Konfiguration zu stellen, wenn die Temperatur (t) der Verarbeitungsflüssigkeit (6) und/oder die Temperatur (t) der Behälter (10) höher als ein oberer Temperaturschwellenwert (t*) des gewünschten Temperaturbereichs und der Füllstand (1) höher als ein Hysteresefüllstandsschwellenwert (l**) des gewünschten Füllstandbereichs ist; wobei der Hysteresefüllstandsschwellenwert (l**) größer als der untere Füllstandsschwellenwert (l*) ist;
wobei die Steuereinheit (11) ferner dazu ausgelegt ist, im Betrieb das Einlassventil (8) in die geöffnete Konfiguration zu stellen, wenn die Temperatur (t) der Verarbeitungsflüssigkeit (6) und/oder die Temperatur (t) der Behälter (10) höher als der obere Temperaturschwellenwert (t*) und der Füllstand (1) niedriger als der untere Hysteresefüllstandsschwellenwert (l**) ist.

10. Steuerungssystem gemäß Anspruch 9, **dadurch gekennzeichnet, dass** die Steuereinheit (11) dazu ausgelegt ist, das Ablassventil (14) in der geöffneten Konfiguration zu halten, bis der Füllstand (1) im Gebrauch unter dem unteren Füllstandsschwellenwert (l*) liegt, es sei denn, die Temperatur (t) der Verarbeitungsflüssigkeit (6) und/oder die Temperatur (t) der Behälter (10) wird im Gebrauch niedriger als der obere Temperaturschwellenwert (t*);
und dass die Steuereinheit (11) dazu ausgelegt ist, das Einlassventil (8) in der geöffneten Konfiguration zu halten, bis im Betrieb der Füllstand (1) größer als der Hysteresefüllstandsschwellenwert (l**) ist, es sei denn, im Betrieb wird die Temperatur (t) der Verarbeitungsflüssigkeit (6) und/oder die Temperatur (t) der Behälter (10) niedriger als der obere Temperaturschwellenwert (t*).

11. Steuerungssystem gemäß einem der Ansprüche 9 bis 10, wobei die Temperaturverarbeitungszone (2, 3, 4) eine Vielzahl von Sammeltanks (5a, 5b, 5c) umfasst, wobei jeder Tank (5a, 5b, 5c) in Fluidverbindung mit den anderen Tanks (5a, 5b, 5c) derselben Temperaturverarbeitungszone (2, 3, 4) steht;
**dadurch gekennzeichnet, dass** die Steuereinheit (11) ferner dazu ausgelegt ist, das Ablassventil (14) des stromabwärts gelegenen Sammeltanks (5c) der Temperaturbearbeitungszone (2, 3, 4) gemäß einem Bewegungsweg (P) der Behälter (10) entlang der Maschine (1) zu steuern.

12. Steuerungssystem gemäß Anspruch 11, **dadurch gekennzeichnet, dass** die Steuereinheit (11) ferner dazu ausgelegt ist, das Einlassventil (8) in die geöffnete Konfiguration zu stellen, um die Einspritzung von frischer Verarbeitungsflüssigkeit (9) direkt in dem stromaufwärts gelegenen Sammeltank (5a) der Temperaturverarbeitungszone (2, 3, 4) gemäß dem Bewegungsweg (P) zu ermöglichen.

13. Steuerungssystem gemäß einem der Ansprüche 9 bis 12, wobei die Temperaturverarbeitungszone (2, 3, 4) ferner einen biochemischen Qualitätsdetektor (15) umfasst, der dazu eingerichtet ist, einen biochemischen Qualitätsindikator (k) der Verarbeitungsflüssigkeit (6) zu erfassen;
**dadurch gekennzeichnet, dass** die Steuereinheit (11) ferner dazu ausgelegt ist, im Gebrauch den biochemischen Qualitätsindikator (k) mit einem gewünschten biochemischen Qualitätsbereich (Δk) zu vergleichen.

14. Maschine (1) zur Temperaturverarbeitung von Behältern (10) für Lebensmittelprodukte, die mindestens eine Temperaturverarbeitungszone (2, 3, 4) umfasst, in der die Behälter (10) durch Einspritzen einer Verarbeitungsflüssigkeit (6) verarbeitet werden, wobei die Temperaturverarbeitungszone (2, 3, 4) umfasst:
- mindestens einen Sammeltank (5a, 5b, 5c) zum Lagern der Verarbeitungsflüssigkeit (6);
- eine Einspritzanordnung (7a, 7b, 7c) zum Einspritzen der Verarbeitungsflüssigkeit (6) aus dem mindestens einen Sammeltank (5a, 5b, 5c) auf die Behälter (10); und
- ein Einlassventil (8), das in eine geöffnete Konfiguration, in der es den Einlass von frischer Verarbeitungsflüssigkeit (9) von außerhalb der Maschine (1) ermöglicht, oder in eine geschlossene Konfiguration steuerbar ist, in der es den Einlass von frischer Verarbeitungsflüssigkeit (9) in die Maschine (1) verhindert;
wobei die Temperaturverarbeitungszone (2, 3, 4) ferner umfasst:
- einen Temperatursensor (12), der dazu eingerichtet ist, die Temperatur (t) der Verarbeitungsflüssigkeit (6) zu erfassen;
- einen Füllstandssensor (13), der dazu eingerichtet ist, einen Füllstand der Verarbeitungsflüssigkeit (6) in dem mindestens einen Sammeltank (5a, 5b, 5c) zu erfassen; und
- ein Ablassventil (14), das in eine geöffnete Konfiguration, in der es das Ablassen von mindestens einem Teil der Verarbeitungsflüssigkeit (6) aus dem mindestens einen Sammeltank (5a, 5b, 5c) ermöglicht, oder in eine geschlossene Konfiguration steuerbar ist, in der es das Ablassen der Verarbeitungsflüssigkeit (6) aus dem mindestens einen Sammeltank (5a, 5b, 5c) verhindert;
**dadurch gekennzeichnet, dass** es ein Steuerungssystem (100) gemäß einem der Ansprüche 9 bis 13 umfasst.

## Revendications

1. Procédé de commande pour commander une machine (1) pour le traitement thermique de récipients (10) de produits alimentaires ; ladite machine (1) comprenant une unité de commande (11) et au moins une zone de traitement thermique (2, 3, 4), les récipients (10) étant traités par injection d'un fluide de traitement (6) sur ceux-ci ; la zone de traitement thermique (2, 3, 4) comprenant, à son tour :
- au moins un réservoir de collecte (5a, 5b, 5c) pour stocker ledit fluide de traitement (6) ; et
- un ensemble d'injection (7a, 7b, 7c) pour injecter ledit fluide de traitement (6) depuis ledit au moins un réservoir de collecte (5a, 5b, 5c) sur lesdits récipients (10) ;
ledit procédé comprenant les étapes consistant à :
i) déterminer une température (t) dudit fluide de traitement (6) au moyen d'une sonde thermique (12) de ladite machine (1) et/ou d'une température (t) desdits récipients (10) ;
ii) comparer la température (t) déterminée à ladite étape i) avec une plage de température souhaitée au moyen de ladite unité de commande (11) ;
iii) détecter un niveau (1) dudit fluide de traitement (6) à l'intérieur dudit au moins un réservoir de collecte (5a, 5b, 5c) au moyen d'une sonde de niveau (13) de ladite machine (1) ;
iv) comparer le niveau (l) détecté à ladite étape iii) avec une plage de niveau souhaitée au moyen de ladite unité de commande (11) ;
v) commander au moyen de ladite unité de commande (11) une vanne de drainage (14) dudit au moins un réservoir de collecte (5a, 5b, 5c) pour qu'elle évacue au moins une partie du fluide de traitement (6) dudit au moins un réservoir de collecte (5a, 5b, 5c), si la température (t) déterminée à l'étape i) est à l'extérieur de ladite plage de température souhaitée et que le niveau (l) détecté à l'étape iii) est au sein de dans ladite plage de niveau souhaitée ; et
vi) commander au moyen de ladite unité de commande (11) une vanne d'entrée (8) de ladite machine (1) pour qu'elle permette l'injection de fluide de traitement frais (9) depuis l'extérieur de ladite machine (1) dans ledit au moins un réservoir de collecte (5a, 5b, 5c), si la température (t) déterminée à l'étape i) est à l'extérieur de ladite plage de température souhaitée et que le niveau (l) détecté à l'étape iii) est à l'extérieur de ladite plage de niveau souhaitée ;
moyennant quoi pendant ladite étape v) ladite unité de commande (11) commande ladite vanne de drainage (14) pour qu'elle évacue au moins une partie du fluide de traitement (6) dudit au moins un réservoir de collecte (5a, 5b, 5c), si la température (t) déterminée à l'étape i) est plus élevée qu'un seuil de température supérieur (t*) de ladite plage de température souhaitée et que le niveau (l) détecté à l'étape iii) est plus élevé qu'un seuil de niveau inférieur (l* ; l**) de ladite plage de niveau souhaitée ; et en ce que pendant ladite étape vi) ladite unité de commande (11) commande ladite vanne d'entrée (8) pour qu'elle permette l'injection de fluide de traitement frais (9) depuis l'extérieur de ladite machine (1) dans ledit au moins un réservoir de collecte (5a, 5b, 5c), si la température (t) déterminée à l'étape i) est supérieure audit seuil de température supérieur (t*) et que le niveau (l) détecté à l'étape iii) est inférieur audit seuil de niveau inférieur (l* ; l**), **caractérisé**
**en ce que** pendant ladite étape v) ladite unité de commande (11) commande ladite vanne de drainage (14) pour qu'elle évacue au moins une partie du fluide de traitement (6) dudit au moins un réservoir de collecte (5a, 5b, 5c), si la température (t) déterminée à l'étape i) est plus élevée que ledit seuil de température supérieur (t*) de ladite plage de température souhaitée et que le niveau (l) détecté à l'étape iii) est plus élevé qu'un seuil de niveau d'hystérésis (l**) de ladite plage de niveau souhaitée ; ledit seuil de niveau d'hystérésis (l**) étant plus grand que ledit seuil de niveau inférieur (l*) ; et en ce que pendant ladite étape vi), ladite unité de commande (11) commande ladite vanne d'entrée (8) pour qu'elle permette l'injection de fluide de traitement frais (9) depuis l'extérieur de ladite machine (1) dans ledit au moins un réservoir de collecte (5a, 5b, 5c) si la température (t) déterminée à l'étape i) est supérieure audit seuil de température supérieur (t*) de ladite plage de température souhaitée et que le niveau (l) détecté à l'étape iii) est inférieur audit seuil de niveau d'hystérésis (l**).

2. Procédé de commande selon la revendication 1, **caractérisé en ce que** ladite étape v) comprend l'étape vii) de commande de ladite vanne de drainage (14) au moyen de ladite unité de commande (11) pour qu'elle évacue le fluide de traitement (6) dudit au moins un réservoir de collecte (5a, 5b, 5c) jusqu'à ce que ledit niveau (l) soit inférieur audit seuil de niveau inférieur (l*) ; et **en ce que** ladite étape vi) comprend l'étape viii) consistant à commander ladite vanne d'entrée (8) au moyen de ladite unité de commande (11) pour qu'elle permette l'injection de fluide de traitement frais (9) depuis l'extérieur de ladite machine (1) dans ledit au moins un réservoir de collecte (5a, 5b, 5c) jusqu'à ce que ledit niveau (l) soit plus élevé que ledit seuil de niveau d'hystérésis (l**) .

3. Procédé de commande selon la revendication 2, **caractérisé en ce qu'**il comprend les étapes supplémentaires consistant à :
ix) empêcher au moyen de ladite unité de commande (11) ladite vanne de drainage (14) d'évacuer le fluide de traitement (6) dudit au moins un réservoir de collecte (5a, 5b, 5c), si pendant ladite étape vii) ladite température (t) dudit fluide de traitement (6) et/ou ladite température (t) desdits récipients (10) devient inférieure audit seuil de température supérieur (t*) ;
x) empêcher au moyen de ladite unité de commande (11) ladite vanne d'entrée (8) de permettre l'injection de fluide de traitement frais (9) dans ledit au moins un réservoir de collecte (5a, 5b, 5c), si pendant ladite étape viii) ladite température (t) dudit fluide de traitement (6) et/ou ladite température (t) desdits récipients (10) devient inférieure audit seuil de température supérieur (t*).

4. Procédé de commande selon les revendications 1 à 3, **caractérisé en ce que** ladite étape v) comprend l'étape supplémentaire xi) consistant à commander au moyen de ladite unité de commande (11) une vanne de drainage (14) d'un réservoir de collecte le plus en aval (5c) de ladite zone de traitement thermique (2, 3, 4) selon un trajet de déplacement (P) desdits récipients (1) le long de ladite machine (1), pour qu'elle évacue au moins une partie du fluide de traitement (6) dudit réservoir de collecte le plus en aval (5c) ; ladite zone de traitement thermique (2, 3, 4) comprenant une pluralité desdits réservoirs de collecte (5a, 5b, 5c), chacun étant en communication fluidique avec les autres réservoirs (5a, 5b, 5c) de la même zone de traitement thermique (2, 3, 4).

5. Procédé de commande selon la revendication 4, **caractérisé en ce que** ladite étape vi) comprend l'étape supplémentaire xii) consistant à commander au moyen de ladite unité de commande (11) ladite vanne d'entrée (8) pour qu'elle permette l'injection de fluide de traitement frais (9) directement dans un réservoir de collecte le plus en amont (5a) de ladite zone de traitement thermique (2, 3, 4) selon ledit trajet de déplacement (P).

6. Procédé de commande selon l'une quelconque des revendications précédentes, **caractérisé en ce qu'**il comprend les étapes supplémentaires consistant à :
xiii) détecter un indicateur de qualité biochimique (k) dudit fluide de traitement (6) au moyen d'un détecteur de qualité biochimique (15) de ladite machine (1) ; et
xiv) comparer l'indicateur de qualité biochimique (k) détecté à ladite étape xiii) avec une plage de qualité biochimique souhaitée (Δk) au moyen de ladite unité de commande (11) ;
xv) commander au moyen de ladite unité de commande (11) ladite vanne de drainage (14) pour qu'elle évacue au moins une partie du fluide de traitement (6) dudit au moins un réservoir de collecte (5a, 5b, 5c), si l'indicateur de qualité biochimique (k) détecté à l'étape xiii) est à l'extérieur de ladite plage de qualité biochimique souhaitée (Δk) et que le niveau (l) détecté à l'étape iii) est au sein de ladite plage de niveau souhaitée ; et ultérieurement à commander au moyen de ladite unité de commande (11) ladite vanne d'entrée (8) pour qu'elle permette l'injection de fluide de traitement frais (9) dans ledit au moins un réservoir de collecte (5a, 5b, 5c) ; et
xvi) commander au moyen de ladite unité de commande (11) ladite vanne d'entrée (8) pour qu'elle permette l'injection de fluide de traitement frais (9) dans ledit au moins un réservoir de collecte (5a, 5b, 5c), si l'indicateur de qualité biochimique (k) détecté à l'étape xiii) est à l'extérieur de ladite plage de qualité biochimique souhaitée (Δk) et que le niveau (l) détecté à l'étape iii) est à l'extérieur de ladite plage de niveau souhaitée.

7. Procédé de commande selon la revendication 6, **caractérisé en ce que** lesdites étapes xv) et xvi) sont effectuées si la température (t) déterminée à l'étape i) est au sein de ladite plage de température souhaitée.

8. Procédé de commande pour commander une machine (1) pour le traitement thermique de récipients (10) de produits alimentaires ; ladite machine (1) comprenant une unité de commande (11), au moins une zone de traitement thermique (2, 3, 4), les récipients (10) étant traités par injection d'un fluide de traitement (6) sur ceux-ci ; la zone de traitement thermique (2, 3, 4) comprenant, à son tour :
- au moins un réservoir de collecte (5a, 5b, 5c) pour stocker ledit fluide de traitement (6) ; et
- un ensemble d'injection (7a, 7b, 7c) pour injecter ledit fluide de traitement (6) depuis ledit au moins un réservoir de collecte (5a, 5b, 5c) sur lesdits récipients (10) ;
ledit procédé étant **caractérisé en ce qu'**il comprend les étapes consistant à :
i) détecter un indicateur de qualité biochimique (k) dudit fluide de traitement (6) au moyen d'un détecteur de qualité biochimique (15) de ladite machine (1) ;
ii) comparer l'indicateur de qualité biochimique (k) détecté à ladite étape i) avec une plage de qualité biochimique souhaitée (Δk) au moyen de ladite unité de commande (11) ;
iii) détecter un niveau (l) dudit fluide de traitement (6) à l'intérieur dudit au moins un réservoir de collecte (5a, 5b, 5c) au moyen d'une sonde de niveau (13) de ladite machine (1) ;
iv) comparer le niveau (l) détecté à ladite étape iii) avec une plage de niveau souhaitée au moyen de ladite unité de commande (11) ;
v) commander au moyen de ladite unité de commande (11) une vanne de drainage (14) dudit au moins un réservoir de collecte (5a, 5b, 5c) pour qu'elle évacue au moins une partie du fluide de traitement (6) dudit au moins un réservoir de collecte (5a, 5b, 5c), si l'indicateur de qualité biochimique (k) détecté à l'étape i) est à l'extérieur de ladite plage de qualité biochimique souhaitée (Δk) et que le niveau (l) détecté à l'étape iii) est au sein de ladite plage de niveau souhaitée ; et ultérieurement à commander au moyen de ladite unité de commande (11) une vanne d'entrée (8) de ladite machine (1) pour qu'elle permette l'injection de fluide de traitement frais (9) depuis l'extérieur de ladite machine (1) dans ledit au moins un réservoir de collecte (5a, 5b, 5c) ; et
vi) commander au moyen de ladite unité de commande (11) une vanne d'entrée (8) de ladite machine (1) pour qu'elle permette l'injection de fluide de traitement frais (9) depuis l'extérieur de ladite machine (1) dans ledit au moins un réservoir de collecte (5a, 5b, 5c), si l'indicateur de qualité biochimique (k) détecté à l'étape i) est à l'extérieur de ladite plage de qualité biochimique souhaitée (Δk) et que le niveau (l) détecté à l'étape iii) est à l'extérieur de ladite plage de niveau souhaitée.

9. Système de commande (100) pour commander une machine (1) pour le traitement thermique de récipients (10) de produits alimentaires ; ladite machine (1) comprenant au moins une zone de traitement thermique (2, 3, 4), les récipients (10) étant traités par injection d'un fluide de traitement (6) sur ceux-ci ; ladite zone de traitement thermique (2, 3, 4) comprenant, à son tour :
- au moins un réservoir de collecte (5a, 5b, 5c) pour stocker ledit fluide de traitement (6) ;
- un ensemble d'injection (7a, 7b, 7c) pour injecter ledit fluide de traitement (6) depuis ledit au moins un réservoir de collecte (5a, 5b, 5c) sur lesdits récipients (10) ; et
- une vanne d'entrée (8) pouvant être commandée dans une configuration ouverte, dans laquelle elle permet l'entrée d'un fluide de traitement frais (9) depuis l'extérieur de ladite machine (1), ou dans une configuration fermée, dans laquelle elle empêche de faire entrer un fluide de traitement frais (9) à l'intérieur de ladite machine (1) ;
ladite zone de traitement thermique (2, 3, 4) comprenant en outre :
- une sonde thermique (12) conçue pour détecter une température (t) dudit fluide de traitement (6) ;
- une sonde de niveau (13) conçue pour détecter un niveau (l) du fluide de traitement (6) à l'intérieur dudit au moins un réservoir de collecte (5a, 5b, 5c) ; et
- une vanne de drainage (14) pouvant être commandée dans une configuration ouverte, dans laquelle elle permet le drainage d'au moins une partie du fluide de traitement (6) depuis ledit au moins un réservoir de collecte (5a, 5b, 5c), ou dans une configuration fermée, dans laquelle elle empêche le drainage du fluide de traitement (6) depuis ledit au moins un réservoir de collecte (5a, 5b, 5c) ;
ledit système de commande (100) comprenant une unité de commande (11) fonctionnellement raccordée à ladite machine (1) ;
ladite unité de commande (11) étant configurée pour comparer la température (t) déterminée par ladite sonde thermique (12) et/ou une température (t) desdits récipients (10) avec une plage de température souhaitée et comparer le niveau (l) détecté par ladite sonde de niveau (13) avec une plage de niveau souhaitée ;
ladite unité de commande (11) est configurée pour régler, lors de l'utilisation, ladite vanne de drainage (14) dans ladite configuration ouverte si la température (t) du fluide de traitement (6) et/ou la température (t) desdits récipients (10) est à l'extérieur de ladite plage de température souhaitée et que le niveau (l) est au sein de ladite plage de niveau souhaitée ;
ladite unité de commande (11) étant en outre configurée pour régler, lors de l'utilisation, ladite vanne d'entrée (8) dans ladite configuration ouverte si la température (t) du fluide de traitement (6) et/ou la température (t) desdits récipients (10) est à l'extérieur de ladite plage de température souhaitée et que le niveau (l) est à l'extérieur de ladite plage de niveau souhaitée, moyennant quoi
ladite unité de commande (11) est configurée pour régler, lors de l'utilisation, ladite vanne de drainage (14) dans ladite configuration ouverte si la température (t) du fluide de traitement (6) et/ou la température (t) desdits récipients (10) est plus élevée qu'un seuil de température supérieur (t*) de ladite plage de température souhaitée et que le niveau (l) est plus élevé qu'un seuil de niveau inférieur (l*, l**) de ladite plage de niveau souhaitée ;
ladite unité de commande (11) étant en outre configurée pour régler, lors de l'utilisation, ladite vanne d'entrée (8) dans ladite configuration ouverte si la température (t) du fluide de traitement (6) et/ou la température (t) desdits récipients (10) est plus élevée que ledit seuil de température supérieur (t*) et que le niveau (l) est inférieur audit seuil de niveau inférieur (l*, l**) ; et
le système de commande est **caractérisé en ce que** ladite unité de commande (11) est configurée pour régler, lors de l'utilisation, ladite vanne de drainage (14) dans ladite configuration ouverte si la température (t) du fluide de traitement (6) et/ou la température (t) desdits récipients (10) est plus élevée qu'un seuil de température supérieur (t*) de ladite plage de température souhaitée et que le niveau (l) est plus élevé qu'un seuil de niveau d'hystérésis (l**) de ladite plage de niveau souhaitée ; ledit seuil de niveau d'hystérésis (l**) étant plus grand que ledit seuil de niveau inférieur (l*) ;
ladite unité de commande (11) étant en outre configurée pour régler, lors de l'utilisation, ladite vanne d'entrée (8) dans ladite configuration ouverte si la température (t) du fluide de traitement (6) et/ou la température (t) desdits récipients (10) est plus élevée que ledit seuil de température supérieur (t*) et que le niveau (l) est inférieur audit seuil de niveau d'hystérésis (l**).

10. Système de commande selon la revendication 9, **caractérisé en ce que** ladite unité de commande (11) est configurée pour maintenir ladite vanne de drainage (14) dans ladite configuration ouverte jusqu'à ce que, lors de l'utilisation, ledit niveau (l) soit inférieur audit seuil de niveau inférieur (l*) à moins que, lors de l'utilisation, ladite température (t) dudit fluide de traitement (6) et/ou ladite température (t) desdits récipients (10) ne devienne inférieure audit seuil de température supérieur (t*) ;
et **en ce que** ladite unité de commande (11) est configurée pour maintenir ladite vanne d'entrée (8) dans ladite configuration ouverte jusqu'à ce que, lors de l'utilisation, ledit niveau (l) soit plus grand que ledit seuil de niveau d'hystérésis (l**) à moins que, lors de l'utilisation, ladite température (t) dudit fluide de traitement (6) et/ou ladite température (t) desdits récipients (10) ne devienne inférieure audit seuil de température supérieur (t*).

11. Système de commande selon les revendications 9 à 10, dans lequel ladite zone de traitement thermique (2, 3, 4) comprend une pluralité de réservoirs de collecte (5a, 5b, 5c) ; chaque réservoir (5a, 5b, 5c) étant en communication fluidique avec les autres réservoirs (5a, 5b, 5c) de la même zone de traitement thermique (2, 3, 4) ;
**caractérisé en ce que** ladite unité de commande (11) est en outre configurée pour commander ladite vanne de drainage (14) du réservoir de collecte le plus en aval (5c) de ladite zone de traitement thermique (2, 3, 4) selon un trajet de déplacement (P) desdits récipients (10) le long de ladite machine (1).

12. Système de commande selon la revendication 11, **caractérisé en ce que** ladite unité de commande (11) est en outre configurée pour régler ladite vanne d'entrée (8) dans ladite configuration ouverte, de façon à permettre l'injection de fluide de traitement frais (9) directement dans le réservoir de collecte le plus en amont (5a) de ladite zone de traitement thermique (2, 3, 4) selon ledit trajet de déplacement (P).

13. Système de commande selon les revendications 9 à 12, dans lequel ladite zone de traitement thermique (2, 3, 4) comprend en outre un détecteur de qualité biochimique (15), qui est conçu pour détecter un indicateur de qualité biochimique (k) dudit fluide de traitement (6) ;
**caractérisé en ce que** ladite unité de commande (11) est en outre configurée pour comparer, lors de l'utilisation, ledit indicateur de qualité biochimique (k) avec une plage de qualité biochimique souhaitée (Δk) .

14. Machine (1) pour le traitement thermique de récipients (10) de produits alimentaires comprenant au moins une zone de traitement thermique (2, 3, 4), les récipients (10) étant traités par injection d'un fluide de traitement (6) sur ceux-ci ; ladite zone de traitement thermique (2, 3, 4) comprenant :
- au moins un réservoir de collecte (5a, 5b, 5c) pour stocker ledit fluide de traitement (6) ;
- un ensemble d'injection (7a, 7b, 7c) pour injecter ledit fluide de traitement (6) depuis ledit au moins un réservoir de collecte (5a, 5b, 5c) sur lesdits récipients (10) ; et
- une vanne d'entrée (8) pouvant être commandée dans une configuration ouverte, dans laquelle elle permet l'entrée de fluide de traitement frais (9) depuis l'extérieur de ladite machine (1), ou dans une configuration fermée, dans laquelle elle empêche de faire entrer un fluide de traitement frais (9) à l'intérieur de ladite machine (1) ;
ladite zone de traitement thermique (2, 3, 4) comprenant en outre :
- une sonde thermique (12) conçue pour détecter une température (t) du fluide de traitement (6) ;
- une sonde de niveau (13) conçue pour détecter un niveau du fluide de traitement (6) à l'intérieur dudit au moins un réservoir de collecte (5a, 5b, 5c) ; et
- une vanne de drainage (14) pouvant être commandée dans une configuration ouverte, dans laquelle elle permet le drainage d'au moins une partie du fluide de traitement (6) depuis ledit au moins un réservoir de collecte (5a, 5b, 5c), ou dans une configuration fermée, dans laquelle elle empêche le drainage du fluide de traitement (6) depuis ledit au moins un réservoir de collecte (5a, 5b, 5c) ;
**caractérisé en ce qu'**il comprend un système de commande (100) selon l'une quelconque des revendications 9 à 13.
